(19) Europäisches Patentamt
European Patent Office
Office européen des brevets

(11) **EP 2 484 725 B1**

(12) **EUROPEAN PATENT SPECIFICATION**

(45) Date of publication and mention of the grant of the patent:
**19.07.2017 Bulletin 2017/29**

(21) Application number: **10820454.6**

(22) Date of filing: **24.09.2010**

(51) Int Cl.:
***C08K 5/00** (2006.01)* ***C08K 5/49** (2006.01)*
***C08K 5/435** (2006.01)* ***C08K 5/47** (2006.01)*
***C08K 5/529** (2006.01)*

(86) International application number:
**PCT/JP2010/066574**

(87) International publication number:
**WO 2011/040337 (07.04.2011 Gazette 2011/14)**

(54) **POLYESTER RESIN COMPOSITION, POLYESTER FIBER, POLYESTER RESIN MOLDED ARTICLE, AND PROCESS FOR PRODUCTION OF NUCLEATING AGENT FOR POLYESTER RESIN**

POLYESTERHARZZUSAMMENSETZUNG, POLYESTERFASER, POLYESTERHARZFORMARTIKEL UND VERFAHREN ZUR HERSTELLUNG EINES NUKLEIERUNGSMITTELS FÜR POLYESTERHARZ

COMPOSITION DE RÉSINE POLYESTER, FIBRE DE POLYESTER, ARTICLE MOULÉ DE RÉSINE POLYESTER ET PROCÉDÉ DE PRODUCTION D'AGENT DE NUCLÉATION POUR UNE RÉSINE POLYESTER

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority:
**30.09.2009 JP 2009228982**
**04.12.2009 JP 2009276790**
**04.12.2009 JP 2009276788**
**04.12.2009 JP 2009276789**
**04.03.2010 JP 2010048235**
**24.06.2010 JP 2010143382**
**30.06.2010 JP 2010150136**

(43) Date of publication of application:
**08.08.2012 Bulletin 2012/32**

(73) Proprietor: **Adeka Corporation**
**Tokyo**
**1160012 (JP)**

(72) Inventors:
- **TSUNEIZUMI Yota**
**Saitama-shi**
**Saitama 336-0022 (JP)**
- **URUSHIHARA Tsuyoshi**
**Saitama-shi**
**Saitama 336-0022 (JP)**
- **KAWAMOTO Naoshi**
**Saitama-shi**
**Saitama 336-0022 (JP)**

(74) Representative: **Gill Jennings & Every LLP**
**The Broadgate Tower**
**20 Primrose Street**
**London EC2A 2ES (GB)**

(56) References cited:
**EP-A1- 2 022 826**
**WO-A1-89/11507**
**WO-A1-90/12007**
**WO-A1-2007/045573**
**JP-A- 5 272 011**
**JP-A- 9 124 785**
**JP-A- 56 013 142**
**JP-A- 2005 105 004**
**JP-A- 2006 001 568**
**JP-A- 2009 091 481**
**JP-A- 2009 096 833**
**JP-A- 2009 215 510**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 484 725 B1

## Description

TECHNICAL FIELD

The present invention relates to a polyester resin composition which comprises a specific sulfonamide compound metal salt and a phosphorus-based antioxidant. More specifically, the present invention relates to a polyester resin composition comprising a sulfonamide compound as a nucleating agent, in which polyester resin composition coloring is inhibited.

Further, the present invention relates to a polyester fiber, more specifically, a polyester fiber which has a low contraction and excellent creep characteristics.

Still further, the present invention relates to a polyester resin molded article and a production method thereof. More specifically, the present invention relates to a polyester resin molded article having excellent transparency and crystallization property; and a production method thereof.

Still further, the present invention related to a method of producing a nucleating agent for polyester resins. More specifically, the present invention relates to a method of producing a nucleating agent for polyester resins by which a nucleating agent for polyester resins which has a small particle size and is not likely to induce secondary aggregation during storage can be obtained.

Still further, the present invention relates to a method of producing a plastic bottle, wherein the production cycle can be improved by inhibiting die contamination to suppress a decrease in the productivity associated with removal of die contamination and improving the thermal contraction resistance of the resulting plastic bottle to inhibit deterioration in the productivity due to defects in molding, by which method a plastic bottle which is transparent and has good outer appearance is produced.

BACKGROUND ART

Polyester resins such as polyethylene terephthalate, polymethylene terephthalate and polylactic acid have excellent heat resistance, chemical resistance, mechanical properties, electrical characteristics and the like, and is excellent in the cost and performance, so that they are industrially widely used as fibers and films. Further, since they also have good gas-barrier properties, sanitary characteristics and transparency, they are widely used in beverage bottles, cosmetic/pharmaceutical containers and the like, as well as in electrophotographic toners.

In addition, polyethylene naphthalate is also excellent in the transparency and has superior mechanical properties and UV barrier property as compared to polyethylene terephthalate, as well as a low gas (oxygen, $CO_2$, water vapor) permeability in particular. Therefore, polyethylene naphthalate is used in film applications such as food/pharmaceutical packagings, APS photographic films and electronic component materials. Meanwhile, polybutylene terephthalate is characterized by having excellent heat resistance, chemical resistance, electrical characteristics, dimensional stability and moldability, so that it is utilized in automobile electronic parts and electrical/electronic components, as well as precision components of office automation equipments.

However, despite the fact that polyester resins are crystalline resins, they generally exhibit extremely slow crystallization rate; therefore, their ranges of molding conditions are very narrow and it is difficult to attain an improvement in the processing cycle, so that their applications are still limited. Further, since a molded article obtained by molding a polyester resin has a low thermal deformation temperature, there is a problem in that the temperature at which such molded article can be used is limited.

As a method of improving the crystallization rate of a polyester resin, it is commonly known to add a nucleating agent, and as the nucleating agent, a metal salt such as sodium benzoate, p-tert-butyl aluminum benzoate or aromatic metal phosphate or a compound such as dibenzylidene sorbitol is employed.

Further, for the purpose of providing a polyester resin composition having excellent crystallization rate, the present inventors have proposed a polyester resin composition in which a sulfonamide compound metal salt in the form of powder is added as a nucleating agent to a polyester resin (see Patent Document 1).

However, in cases where a sulfonamide compound metal salt in the form of powder is added as a nucleating agent to a polyester resin and the resulting composition is molded, the nucleating agent exhibits poor dispersion in the polyester resin, so that there is a problem in that a resulting molded article partially becomes turbid. In addition, in cases where a masterbatch is prepared by blending a sulfonamide compound metal salt with a polyester resin at a high concentration, there is a problem in that the color of the polyester resin changes to pale yellow to deteriorate the outer appearance of a resulting molded article.

Meanwhile, polyester resins have excellent dimensional stability, anti-weatherability, mechanical properties, durability, electrical characteristics, chemical resistance and the like. In particular, polyethylene terephthalate resins (hereinafter, may be referred to as "PET resin(s)") have high strength and good dye-affinity and are easily produced; therefore, investigation thereof as a synthetic fiber has been advanced and their application has been expanded to a

variety of fields such as clothings, vehicle interior materials and shock-absorbing materials. For example, in Patent Document 2, in order to prevent noise and vibration associated with the engine sound and drive in a special-purpose vehicle used at a construction site, a method of utilizing a PET fiber by forming a nonwoven fabric thereof and laminating it as an acoustic insulating material (sound-absorbing material) in the form of a mat inside the engine compartment is proposed.

PET resins are generally known to have a large thermal contraction. Taking advantage of this property, for example, PET resin films are used as labels of beverage bottles and food containers. Such application is possible because of a property of the PET resin films to contract when heated at a temperature of not lower than the glass transition temperature or near the melting point and the stress applied in the film stretching direction is released.

However, in cases where a PET resin is used as a fiber, this property of thermal contraction poses a problem. For example, in the case of the acoustic insulating material according to Patent Document 2, since the temperature of the engine compartment becomes high, there are cases where the PET fiber thermally contracts and loses the effect as an acoustic insulating material.

In addition, it is known to insert a fiber layer into a vehicle tire structure to improve the cushioning characteristics of the rubber component; however, the stress applied on the tire is influenced by the traveling environment of the vehicle and thus not constant, so that there are cases where the distortion (creep) on the fibers increases over time, resulting in a deformation of the tire structure or burst of the tire.

Further, polyester resins such as polyethylene terephthalate, polymethylene terephthalate and polylactic acid are excellent in the transparency, heat resistance, chemical resistance, mechanical properties, electrical characteristics, gas-barrier properties and cost/performance, and in particular, polyethylene terephthalate resins whose major repeating unit is ethylene terephthalate (hereinafter, may be referred to as "PET resin(s)") are widely used in bottle containers of carbonated drinks, juice drinks, mineral waters and the like; cosmetic and pharmaceutical containers; detergent and shampoo containers; electrophotographic toners; and packaging materials of food items, pharmaceuticals and the like. A biaxially stretch-blow molded bottle obtained by biaxial stretching has excellent heat resistance, transparency and glossiness, as well as relatively good gas-barrier properties. However, a biaxially stretch-blow molded bottle made of a PET resin still does not have sufficient gas-barrier properties to be used as a container of an alcoholic beverage (e.g. rice wine, beer), carbonated drink (e.g. cider, cola) or juice drink (e.g. fruit beverage), or as a pharmaceutical container; therefore, from the standpoint of protecting the content, an improvement in the gas-barrier properties is demanded.

Since a PET resin bottle container may be filled with a hot beverage sterilized at a high temperature or may be itself sterilized after being filled with a beverage, when the PET resin bottle container has poor heat resistance, contraction or deformation thereof may occur during such heat treatment.

As a method of improving the heat resistance of a PET resin bottle container, there are proposed a method in which a stretched bottle container is thermally fixed and a method of improving the degree of crystallinity of a bottle mouth by performing a heat treatment. For example, in Patent Document 3, a method of performing a heat treatment with a stretch-blow molding die at a high temperature is proposed; however, when a number of PET resin bottles are continuously molded by this method using the same die, there is a problem in that the die gradually becomes dirty due to adhesion of the resin thereto, making the resulting molded article (PET resin bottle) whitened, which results in deterioration of the commercial value.

Further, in Patent Documents 4 and 5, a method of improving the heat resistance by subjecting the mouth section of a preform or molded bottle to a heat treatment to promote crystallization is proposed; however, in this method, the productivity is largely influenced by the treatment time and temperature required for the crystallization. In particular, a PET resin has an extremely slow crystallization rate despite of being a crystalline resin; therefore, its range of molding conditions is very narrow and it is difficult to attain an improvement in the processing cycle.

Moreover, in packaging materials, in order to inhibit the oxidation and degeneration of the content and to maintain the taste, freshness, efficacy and the like, the packaging material to be used is required to have gas-barrier properties against oxygen and water vapor. Particularly in food applications, in order to ensure the visibility of the content and the packaging property for a variety of miscellaneous items, packaging materials are required to have a variety of characteristics such as transparency, heat resistance and flexibility, in addition to the above-described gas-barrier properties.

Further, also in those emerging fields such as organic ELs, organic thin-film solar cells, organic transistors and flexible liquid crystals, there is a demand for the development of a sheet having a variety of characteristics such as high gas-barrier properties, transparency, heat resistance and flexibility.

For the purpose of providing a polyester resin composition having excellent crystallization rate, the present inventors have proposed a polyester resin composition in which a sulfonamide compound metal salt is added as a nucleating agent to a polyester resin (see Patent Document 1).

However, although the molding cycle is shortened when the molding is performed with an addition of a sulfonamide compound metal salt proposed as the nucleating agent of Patent Document 1, there are cases where the resulting polyester resin molded article is not sufficiently crystallized.

In addition, when a heat treatment (annealing treatment) is performed on the molded article to promote crystallization, although the crystallinity is improved, there is a problem in that the molded article becomes whitened to lose its transparency, resulting in deterioration of the commercial value.

Furthermore, despite the fact that polyester resins such as polyethylene terephthalate are crystalline resins, their ranges of molding conditions are very narrow and it is difficult to attain an improvement in the molding cycle, so that applications of the molded materials are still limited.

This drawback is attributed to the crystallinity of the polyester resins, and it is known that an addition of a nucleating agent raises the crystallization temperature of a polyester resin to improve the molding cycle.

In Patent Document 1, the present inventors discloses an invention which promotes the crystallization of a polyester resin composition by using a sulfonamide compound metal salt as a nucleating agent for polyester resins, by which invention a molding cycle that could not be attained by a conventional nucleating agent is achieved.

However, in cases where the sulfonamide compound metal salt to be added to a polyester resin contains particles larger than 250 μm, it may not be completely melted at the time of melt-kneading with the polyester resin. When such nucleating agent is applied to, for example, a fiber material, the fiber may be broken at the time of stretching. Further, when such nucleating agent is applied to a film material, fish eyes are generated on the film surface in some cases, and the sheet may not be uniformly stretched or a hole may be made on the film surface. Moreover, in cases where such nucleating agent is used in molding of a bottle container or a sheet, there is a problem in that, due to its excessively strong effect to promote crystallization of the polyester resin, the resulting molded article becomes partially or entirely whitened, resulting in deterioration of the outer appearance.

It is known that these problems can be improved by uniformly dispersing the above-described nucleating agent for polyester resins in the polyester resin. In order to attain uniform dispersion, for example, the nucleating agent can be pulverized to a volume average particle size of 0.5 to 50 μm and a sufficient 250 μm mesh-pass value, thereby solving the above-described problems.

However, in cases where it takes a long time to pulverize the above-described nucleating agent to a volume average particle size of 0.5 to 50 μm, there are problems in that the pulverized product aggregates and becomes adhered (deposited) to the pulverizing vessel and that the pulverized product is melted and aggregated (fused) due to the heat generated during the pulverization, so that the nucleating agent can hardly be recovered and the pulverization cannot be performed stably. Further, there is also a problem in that secondary aggregation of the pulverized product occurs during transportation and warehouse storage, causing blocking in the nucleating agent.

The trend is that the demand for polyester resins, particularly bottle containers, will further increase with the growth of the beverage market. In the field of beverage bottle containers, it is critical to maintain the taste and flavor of the beverage; therefore, in order to eliminate the temperature effect on the content as much as possible, so-called aseptic (sterile) filling system, in which sterilization and cooling of a container are performed in a short time and beverage is filled in the thus sterilized container at room temperature, is adopted.

As a bottle container used in such aseptic filling, plastic bottles produced by stretch-blow molding or the like of polyester, polyolefin, polyamide or the like are known. As the method of producing a plastic bottle using a polyester, for example, as described in Patent Document 6, there are known a method in which molten polyethylene terephthalate molten is ejected (extruded) into a die to injection-mold (extrusion-mold) a preform (parison) and the thus molded closed-end cylindrical preform is blow-molded by blowing a gas thereto to obtain a prescribed plastic bottle; and a method in which a heat treatment (heat-setting) is further performed to obtain a plastic bottle for heat-resistant applications.

As a plastic bottle for beverage applications which is made of polyethylene terephthalate, a polyester resin comprising an antimony compound or germanium compound as a polycondensation catalyst is mainly used; however, in such plastic bottle, there is a problem in that by-products such as acetaldehyde and cyclic low-molecular-weight components are generated in the resin during melt-molding.

Since acetaldehyde deteriorates the flavor of the bottled content, in a plastic bottle for beverage, it is required that the generation of acetaldehyde be inhibited as much as possible.

Furthermore, the above-described by-products such as cyclic low-molecular-weight components are considered to be the cause for contamination of the die vent port of a molding machine or the die inner surface and exhaust pipe of a blow molding machine. Since a contaminated die causes the resulting molded articles to have a rough surface and become whitened, die contamination must be cleaned; however, there is a problem in that the productivity is markedly reduced in association with the cleaning of the die.

As a method of inhibiting the above-described acetaldehyde generation, for example, a method in which molding is performed at a low temperature is considered. However, by lowering the molding temperature, there arise problems of whitening of the resulting molded article and a large reduction in its transparency.

Further, as a method of reducing the generation of the above-described by-products such as cyclic low-molecular-weight components which causes die contamination, for example, Patent Document 7 discloses a method of inactivating a catalyst in a resin by bringing it to contact with a hot water having a temperature of 50 to 100°C after performing polycondensation. Still, although this method can reduce the generation of by-products, there is a problem

in that it requires the resin drying step, which lowers the productivity.

In addition, as a method of obtaining a molded article having excellent transparency by inhibition of die contamination, Patent Document 8 discloses a method in which a polyester resin obtained by polycondensation through an esterification reaction or transesterification reaction between a dicarboxylic acid component, which comprises terephthalic acid or an ester-forming derivative thereof in an amount of not less than 90 mol% with respect to the dicarboxylic acid component, and a diol component, which comprises ethylene glycol in an amount of not less than 90 mol% with respect to the diol component, is molded at 270°C.

However, among polyester resins, polyethylene terephthalate has an extremely slow crystallization rate despite of being a crystalline resin; therefore, there are problems in that its range of molding conditions is narrow and that the thermal contraction of the resulting molded article becomes prominent when the die temperature is lowered, leading to frequent occurrence of defective molding and deteriorated productivity.

As a method of improving the crystallization rate of a resin composition, a method of adding a nucleating agent is generally known, and examples of the nucleating agent include polymers, minerals, metal salts of organic acids and inorganic acids, powder glass and powder metals. More specific examples include olefins such as low-density polyethylene, high-density polyethylene and linear low-density polyethylene; minerals (clays) such as graphite, talc and kaolin; metal oxides such as zinc oxide, alumina and magnesium oxide; silica compounds such as silica, calcium silicate and magnesium silicate; metal carbonates such as magnesium carbonate, calcium carbonate, sodium carbonate and potassium carbonate; barium sulfate; calcium sulfate; sodium benzoate; p-tert-butyl aluminum benzoate; metal salts of aromatic phosphate; dibenzylidene sorbitols; and sulfonamide compounds. In addition, for example, Patent Document 1 proposes a polyester resin composition in which a sulfonamide compound is added to polyethylene terephthalate.

However, in cases where a sulfonamide compound is used as a nucleating agent, although the crystallization rate at the time of molding a preform is improved by an addition of the nucleating agent in the form of powder to polyethylene terephthalate, there is a problem in that the surface of the preform becomes partially whitened to make blow-molding impossible, so that a plastic bottle cannot be obtained.

## RELATED ART DOCUMENTS

## PATENT DOCUMENTS

Patent Document 1: Japanese Unexamined Patent Application Publication No. 2007-327028

Patent Document 2: Japanese Unexamined Patent Application Publication No. 2007-230312

Patent Document 3: Japanese Patent Publication No. S59-6216

Patent Document 4: Japanese Unexamined Patent Application Publication No. S55-79237

Patent Document 5: Japanese Unexamined Patent Application Publication No. S58-110221

Patent Document 6: Japanese Unexamined Patent Application Publication No. H08-156077

Patent Document 7: Japanese Examined Patent Application Publication No. H7-37515

Patent Document 8: Japanese Unexamined Patent Application Publication No. 2006-22340


## SUMMARY OF THE INVENTION

## PROBLEMS TO BE SOLVED BY THE INVENTION

Therefore, an object of the present invention is to provide a polyester resin composition which solves the above-described problems in the prior art and comprises a sulfonamide compound as a nucleating agent, in which polyester resin composition coloring is inhibited.

Another object of the present invention is to provide a polyester fiber which solves the above-described conventional problems and has excellent creep characteristics and a low thermal contraction rate.

Still another object of the present of the present invention is to provide a polyester resin molded article which solves the above-described conventional problems and is capable of attaining the transparency and crystallinity at a

high level; and a method of producing the polyester resin molded article.

Yet still another object of the present invention is to provide a method of producing a nucleating agent for polyester resins by which a nucleating agent for polyester resins, which solves the above-described conventional problems, has a small particle size and is not likely to induce secondary aggregation during storage, can be obtained.

Yet still another object of the present invention is to provide a method of producing a plastic bottle in which the productivity is improved by inhibiting die contamination.

MEANS FOR SOLVING THE PROBLEMS

The present invention is defined by the present claims and regards a composition as defined in claim 1 and a method dependent thereon as defined in claim 8. order to solve the above-described problems, the present inventors intensively studied to discover that the above-described problems can be solved by adding a mixture of a sulfonamide compound metal salt adjusted to have a specific water content and a phosphorus-based antioxidant to a polyester resin, thereby completing the present invention.

Further, the present inventors discovered that the above-described problems can be solved by adding a nucleating agent for polyester resins which is composed of a sulfonamide compound metal salt or sulfonimide compound metal salt to a polyester resin, thereby completing the present invention.

Still further, the present inventors discovered that the above-described problems can be solved by adding a nucleating agent for polyester resins which is composed of a sulfonamide compound metal salt or sulfonimide compound metal salt to a polyester resin and by, after molding the resulting mixture, subjecting the thus obtained mold to a specific annealing treatment, thereby completing the present invention.

Still further, the present inventors discovered that the above-described problems can be solved by drying the above-described nucleating agent to a percent water content of not higher than a specific value and by pulverizing the resultant using a pulverizer not utilizing a grinding medium, thereby completing the present invention.

Still further, the present inventors discovered that the above-described objects can be achieved by: preparing a resin composition by mixing a masterbatch comprising a nucleating agent for polyester resins which is composed of a sulfonamide compound metal salt or sulfonimide compound metal salt with a polyester resin; and setting the die temperature to a specific temperature when molding the thus prepared resin composition into the form of a bottle, thereby completing the present invention.

That is, the polyester resin composition according to the present invention is a polyester resin composition comprising, with respect to 100 parts by mass of a polyester resin, 0.01 to 30 parts by mass of a phosphorus-based antioxidant (A) and 0.1 to 30 parts by mass of a sulfonamide compound metal salt (B),
wherein the sulfonamide compound metal salt (B) has a water content of 0.1% to 20% based on the mass ratio with respect to the sulfonamide compound metal salt and not higher than 3% based on the mass ratio with respect to the polyester resin composition.

The polyester fiber according to the present invention is characterized by being composed of a polyester resin composition which comprises, with respect to 100 parts by mass of a polyester resin, 0.001 to 1 parts by mass of a nucleating agent for polyester resins which is composed of a sulfonamide compound metal salt or sulfonimide compound metal salt.

The polyester resin molded article according to the present invention is characterized by being subjected to an annealing treatment for 1 second to 2 minutes after molding of a polyester resin composition comprising, with respect to 100 parts by mass of a polyester resin, 0.001 to 1 parts by mass of a nucleating agent for polyester resins which is composed of a sulfonamide compound metal salt or sulfonimide compound metal salt.

Further, the polyester resin molded article according to the present invention is characterized by being obtained by stretching a polyester resin molded article comprising, with respect to 100 parts by mass of a polyester resin, 0.001 to 1 parts by mass of a nucleating agent for polyester resins which is composed of a sulfonamide compound metal salt or sulfonimide compound metal salt, and having a half-value width of the maximum peak at about 1730 $cm^{-1}$ obtained by microscopic Raman spectroscopy of not greater than 18 $cm^{-1}$.

The method of producing a nucleating agent for polyester resins according to the present invention is a method of producing a nucleating agent for polyester resins which is composed of a sulfonamide compound metal salt or sulfonimide compound metal salt, wherein the above-described nucleating agent for polyester resins is dried to a percent water content of not higher than 8% by mass and then pulverized by a pulverizer not utilizing a grinding medium.

The method of producing a plastic bottle according to the present invention is a method of producing a plastic bottle by molding a polyester resin composition comprising a nucleating agent for polyester resins which is composed of a sulfonamide compound metal salt or sulfonimide compound metal salt, wherein a masterbatch which comprises 0.1 to 90 parts by mass of the above-described nucleating agent for polyester resins with respect to 100 parts by mass of a polyester resin having an intrinsic viscosity of 0.5 to 1.1 dL/g is prepared and the thus obtained masterbatch is then mixed with the polyester resin to prepare a resin composition which comprises 0.005 to 0.025 parts by mass of the

above-described nucleating agent for polyester resins with respect to 100 parts by mass of the polyester resin having an intrinsic viscosity of 0.5 to 1.1 dL/g, followed by stretch-blow molding of the thus prepared resin composition into the form of a bottle at a die temperature of 85 to 160°C.

## EFFECTS OF THE INVENTION

By the present invention, a polyester resin composition comprising a sulfonamide compound as a nucleating agent, in which polyester resin composition coloring is inhibited, can be provided.

Further, by the present invention, a polyester fiber having excellent creep characteristics and a low thermal contraction rate can be obtained.

Still further, according to the present invention, a polyester resin molded article satisfying desired transparency and crystallinity can be produced by adding, as a crystal nucleating agent, a nucleating agent for polyester resins which is composed of a sulfonamide compound metal salt or sulfonimide compound metal salt to a polyester resin and by, after molding the resulting mixture, subjecting the thus obtained molded article to a specific annealing treatment.

Still further, by the present invention, a nucleating agent for polyester resins which is composed of a sulfonamide compound or sulfonimide compound, the nucleating agent having a small particle size and being not likely to induce secondary aggregation during storage, can be obtained.

Further, in the present invention, the production cycle of a plastic bottle can be improved by inhibiting die contamination to suppress a decrease in the productivity associated with removal of die contamination and allowing a produced plastic bottle to have good thermal contraction property to inhibit deterioration in the productivity due to defects in molding. In addition, the produced plastic bottle is transparent and has good outer appearance.

## MODE FOR CARRYING OUT THE INVENTION

The polyester resin composition according to the present invention is a polyester resin composition comprising, with respect to 100 parts by mass of a polyester resin, 0.01 to 30 parts by mass of a phosphorus-based antioxidant (A) and 0.1 to 30 parts by mass of a sulfonamide compound metal salt (B),
which polyester resin composition is characterized in that the sulfonamide compound metal salt (B) has a water content of 0.1% to 20% based on the mass ratio with respect to the sulfonamide compound metal salt and not higher than 3% based on the mass ratio with respect to the polyester resin composition.

The polyester resin composition according to the present invention will now be described in detail.

As the polyester resin used in the polyester resin composition according to the present invention, any conventional thermoplastic polyester resin may be employed, and it is not particularly restricted. For instance, a broad range of polyester resins, such as aromatic polyesters including polyalkylene terephthalates such as polyethylene terephthalate, polybutylene terephthalate and polycyclohexanedimethylene terephthalate and polyalkylene naphthalates such as polyethylene naphthalate and polybutylene naphthalate; polyetherester resins obtained by copolymerizing a polyester constituent and other acid component and/or glycol component (for example, an acid component such as isophthalic acid, adipic acid, sebacic acid, glutaric acid, diphenylmethane dicarboxylic acid or dimer acid and/or a glycol component such as hexamethylene glycol, bisphenol A or neopentyl glycol-alkylene oxide adduct); degradable aliphatic polyesters such as polyhydroxybutyrate, polycaprolactone, polybutylene succinate, polyethylene succinate, polylactic acid resins, polymalic acid, polyglycolic acid, polydioxanone and poly(2-oxetanone); aromatic polyester/polyether block copolymers; aromatic polyester/polylactone block copolymers; and polyarylates, may also be employed. Among these, at least one polyester resin selected from the group consisting of polyethylene terephthalate, polyethylene naphthalate and polylactic acid is preferably employed, and in particular, polyethylene terephthalate is more preferably employed since it makes the effects of the present invention prominent.

Further, the above-described polyester resins may be used individually or in the form of a blend of a plurality thereof (for example, a blend of polyethylene terephthalate and polybutylene terephthalate) or a copolymer thereof (for example, a copolymer of polybutylene terephthalate and polytetramethylene glycol); however, in particular, one having a melting point of 200°C to 300°C is preferably used since such polyester resin exhibits a heat resistant characteristic.

Examples of the above-described phosphorus-based antioxidant used in the present invention include triphenyl phosphite, trisnonylphenyl phosphite, tris(2,4-di-tert-butylphenyl)phosphite, tris(2,4-di-tert-butyl-5-methylphenyl)phosphite, tris[2-tert-butyl-4-(3-tert-butyl-4-hydroxy-5-methylphenylthio)-5-methylphenyl]phosphite, tridecyl phosphite, octyldiphenyl phosphite, di(decyl)monophenyl phosphite, di(tridecyl)pentaerythritol diphosphite, di(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, bis(2,4-dicumylphenyl)pentaerythritol diphosphite, tetra(tridecyl)isopropylidene diphenol diphosphite, tetra(tridecyl)-4,4'-n-butylidenebis(2-tert-butyl-5-methylphenol)diphosphite, hexa(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide, 2,2'-methylenebis(4,6-tert-butylphenyl)-2-ethylhexyl phosphite, 2,2'-methylenebis(4,6-tert-butylphenyl)-octadecyl phosphite, 2,2'-ethylidenebis(4,6-di-tert-butylphenyl)fluorophosphite, tris(2-[(2,4,8,10-tetrakis-tert-butyldibenzo [d,f][1,3,2] dioxaphosphepine-6-yl)oxy] ethyl)amine and phosphites of 2-ethyl-2-butylpropylene glycol and 2,4,6-tri-tert-butylphenol; however, one represented by the following Formula (1):

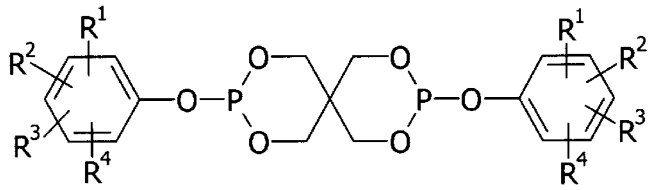

(1)

(wherein, $R^1$, $R^2$, $R^3$ and $R^4$ each independently represent a hydrogen atom, a $C_1$-$C_8$ alkyl group which is optionally branched, a $C_6$-$C_{12}$ aryl group which is optionally substituted or a $C_6$-$C_{12}$ aralkyl group) is preferred since such phosphorus-based antioxidant is particularly excellent in preventing coloring of the polyester resin.

The above-described phosphorus-based antioxidant is used in an amount of 0.01 to 30 parts by mass with respect to 100 parts by mass of the above-described polyester resin. When the amount is 0.01 parts by mass or less, the polyester resin composition may not be able to attain sufficient stabilizing effect, while when the amount is greater than 30 parts by mass, the shape stability as a masterbatch may be impaired and dispersion of the antioxidant in the resin may be reduced, which adversely affect the outer appearance of the resulting molded article.

Examples of the $C_1$-$C_8$ alkyl group represented by $R^1$, $R^2$, $R^3$ and $R^4$ in the above-described Formula (1) include methyl, ethyl, propyl, isopropyl, butyl, sec-butyl, tert-butyl, isobutyl, amyl, isoamyl, tert-amyl, hexyl, cyclohexyl, heptyl, isoheptyl, tert-heptyl, n-octyl, isooctyl, tert-octyl, 2-ethylhexyl and trifluoromethyl, and the hydrogen atoms in these groups are optionally substituted by a halogen atom, saturated aliphatic ring, aromatic ring or the like. Further, examples of the above-described $C_6$-$C_{12}$ aryl group which is optionally substituted include phenyl group and naphthyl group, and examples of the $C_6$-$C_{12}$ aralkyl group include those in which a hydrogen atom of the above-described alkyl group is substituted by an aryl group.

Preferred specific examples of the phosphorus-based antioxidant represented by the above-described Formula (1) include the following Compounds No. 1 to No. 5. However, the present invention is not restricted thereto at all.

Compound No. 1

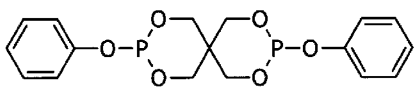

Compound No. 2

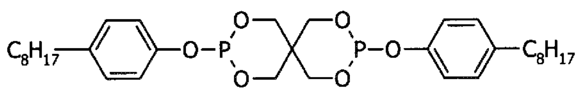

Compound No. 3

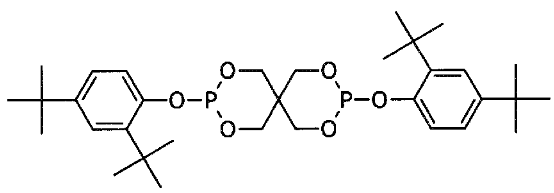

Compound No. 4

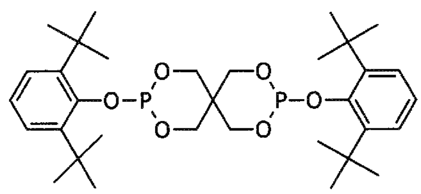

Compound No. 5 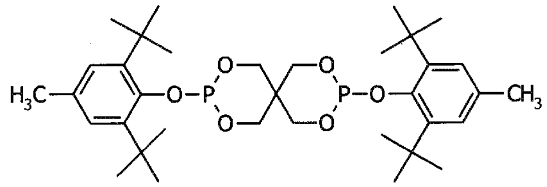

The sulfonamide compound in the sulfonamide compound metal salt used in the present invention refers to a compound having a sulfonamide skeleton, and examples thereof include sulfonamide, methane sulfonamide, benzenesulfonamide, toluene-4-sulfonamide, 4-chlorobenzenesulfonamide, 4-aminobenzenesulfonamide, N-butyl-4-methylbenzenesulfonamide, N-phenylbenzenesulfonamide, N-phenyl-4-methyl-benzenesulfonamide, 4-amino-N-pyridine-2-ylbenzenesulfonamide, 4-amino-N-(5-methyl-thiazol-2-yl)-benzenesulfonamide, 4-amino-N-thiazol-2-yl-benzenesulfonamide, 4-amino-N-(5-methyl-isoxazol-3-yl)-benzenesulfonamide, 4-amino-N-(2,6-dimethoxy-pyrimidine-4-yl)-benzenesulfonamide, 1,2-benzisothiazol-3(2H)-one-1,1-dioxide, 4-amino-6-chloro-benzene-1,3-disulfonic acid diamide, 6-ethoxy-benzotriazol-2-sulfonic acid amide, 5-dimethylamino-naphthalene-1-sulfonic acid amide, 4-sodiumoxy-benzenesulfonamide and N-(4-benzenesulfonamide-phenyl)-benzenesulfonamide. In the present invention, 4-aminobenzenesulfonamide, N-phenyl-benzenesulfonamide, 1,2-benzisothiazol-3(2H)-one-1,1 -dioxide and the like are preferred. These sulfonamide compound metal salts are preferably used since they have excellent effect to promote crystallization of the polyester resin, and a 1,2-benzisothiazol-3(2H)-one-1,1-dioxide metal salt is particularly preferred.

The above-described sulfonamide compound metal salt is added in an amount of 0.1 to 30 parts by mass with respect to 100 parts by mass of the above-described polyester resin. In cases where the amount is less than 0.1 parts by mass, since the action and effect of the addition are low when the resulting mixture is made into a masterbatch, it is required to add the masterbatch in a large amount, which may deteriorate the physical properties of the polyester resin. Further, when the amount is greater than 30 parts by mass, the outer appearance of the resulting molded article of the polyester resin composition may be adversely affected due to a reduction in dispersion of the sulfonamide compound metal salt in the resin or the like.

Examples of the metal of the above-described sulfonamide compound metal salt include metals selected from lithium, potassium, sodium, magnesium, calcium, strontium, barium, titanium, manganese, iron, zinc, silicon, zirconium and yttrium. Thereamong, potassium, lithium, sodium and calcium are preferred since these metals have excellent effect to promote crystallization of the polyester resin, and sodium is particularly preferred.

The water content of the above-described sulfonamide compound was measured using a thermal analyzer such as Thermo Plus 2 manufactured by Rigaku Corporation and evaluated as the amount of decrease in the weight when the temperature of the sulfonamide compound was raised from room temperature to 150°C under the following measurement conditions (under a nitrogen atmosphere (flow rate: 200 ml/min), heating rate: 50°C /min, sample: 5 mg). In the present invention, the sulfonamide compound has a water content of preferably 0.1 to 20%, particularly preferably 0.1 to 5%, based on the mass ratio.

Since the sulfonamide compound has moisture-absorbing property, it is uneconomical to dry the sulfonamide compound to a water content of less than 0.1 %. When the water content is higher than 20%, coloring may occur in association with the hydrolysis of the polyester resin and a problem of foam formation may arise at the time of molding, so that the outer appearance of the molded article of the polyester resin composition may be deteriorated.

In addition, it is required that the above-described sulfonamide compound be added in such a manner that the water content thereof does not exceed 3% based on the mass ratio with respect to the polyester resin composition. When the polyester resin composition is processed at a water content of higher than 3%, the moldability is deteriorated due to marked hydrolysis, a reduction in the viscosity of the polyester resin per se and deposition of low molecular weight materials.

The sulfonamide compound according to the present invention can be adjusted to have a desired particle size by using a variety of pulverizers, and in the present invention, it is preferred that the sulfonamide compound have an average particle size of not greater than 100 μm. When it is greater than 100 μm, the outer appearance of the molded article of the polyester resin composition may be deteriorated. In the present invention, the average particle size of the sulfonamide compound is measured by a laser diffraction-scattering-type particle size analyzer (Microtrac MT3000II; manufactured by Nikkiso Co., Ltd.) and represents a value obtained at a volume average of 50% by a laser diffraction-scattering method (Microtrac method).

In the polyester resin composition according to the present invention, other conventional additive(s) may be further blended as required. Examples of the method of blending other additive(s) include a method in which other additive(s) is/are mixed with a polyester resin composition according to the present invention in an amount suitable for the purpose thereof and the resultant is then melt-kneaded and granulated using a molding machine such as an extruder. Examples of such other additive(s) include UV absorbers, hindered amine compounds, heavy metal inactivators, nucleating agents other than the one used in the present invention, flame retardants, metallic soaps, hydrotalcites, fillers, lubricants, antistatic agents, pigments, dyes and plasticizers. The phosphorus-based antioxidant and the nucleating agent that are used in the present invention, other nucleating agent or other phosphorus-based antioxidant may also be added to the polyester resin composition to be molded.

Examples of the above-described UV absorber include 2-hydroxybenzophenones such as 2,4-dihydroxybenzophenone, 2-hydroxy-4-methoxybenzophenone, 2-hydroxy-4-octoxybenzophenone and 5,5'-methylenebis(2-hydroxy-4-methoxybenzophenone); 2-(2-hydroxyphenyl)benzotriazoles such as 2-(2-hydroxy-5-methylphenyl)benzotriazole, 2-(2-hydroxy-5-tert-octylphenyl)benzotriazole, 2-(2-hydroxy-3,5-di-tert-butylphenyl)-5-chlorobenzotriazole, 2-(2-hydroxy-3-tert-butyl-5-methylphenyl)-5-chlorobenzotriazole, 2-(2-hydroxy-3,5-dicumylphenyl)benzotriazole, 2,2'-methylenebis(4-tert-octyl-6-benzotriazolylphenol), polyethylene glycol esters of 2-(2-hydroxy-3-tert-butyl-5-carboxyphenyl)benzotriazole, 2-[2-hydroxy-3-(2-acryloyloxyethyl)-5-methylphenyl]benzotriazole, 2-[2-hydroxy-3-(2-methacryloyloxyethyl)-5-tert-butylphenyl]benzotriazole, 2-[2-hydroxy-3-(2-methacryloyloxyethyl)-5-tert-octylphenyl]benzotriazole, 2-[2-hydroxy-3-(2-methacryloyloxyethyl)-5-tert-butylphenyl]-5-chlorobenzotriazole, 2-[2-hydroxy-5-(2-methacryloyloxyethyl)phenyl]benzotriazole, 2-[2-hydroxy-3-tert-butyl-5-(2-methacryloyloxyethyl)phenyl]benzotriazole, 2-[2-hydroxy-3-tert-amyl-5-(2-methacryloyloxyethyl)phenyl]benzotriazole, 2-[2-hydroxy-3-tert-butyl-5-(3-methacryloyloxypropyl)phenyl]-5-chlorobenzotriazole, 2-[2-hydroxy-4-(2-methacryloyloxymethyl)phenyl]benzotriazole, 2-[2-hydroxy-4-(3-methacryloyloxy-2-hydroxypropyl)phenyl]benzotriazole and 2-[2-hydroxy-4-(3-methacryloyloxypropyl)phenyl]benzotriazole; 2-(2-hydroxyphenyl)-4,6-diaryl-1,3,5-triazines such as 2-(2-hydroxy-4-methoxyphenyl)-4,6-diphenyl-1,3,5-triazine, 2-(2-hydroxy-4-hexyloxyphenyl)-4,6-diphenyl-1,3,5-triazine, 2-(2-hydroxy-4-octoxyphenyl)-4,6-bis(2,4-dimethylphenyl)-1,3,5-triazine, 2-[2-hydroxy-4-(3-Cl2 to 13 mixed alkoxy-2-hydroxypropoxy)phenyl]-4,6-bis(2,4-dimethylphenyl)-1,3,5-triazine, 2-[2-hydroxy-4-(2-acryloyloxyethoxy)phenyl]-4,6-bis(4-methylphenyl)-1,3,5-triazine, 2-(2,4-dihydroxy-3-allylphenyl)-4,6-bis(2,4-dimethylphenyl)-1,3,5-triazine and 2,4,6-tris(2-hydroxy-3-methyl-4-hexyloxyphenyl)-1,3,5-triazine; benzoates such as phenyl salicylate, resorcinol monobenzoate, 2,4-di-tert-butylphenyl-3,5-di-tert-butyl-4-hydroxybenzoate, octyl(3,5-di-tert-butyl-4-hydroxy)benzoate, dodecyl(3,5-di-tert-butyl-4-hydroxy)benzoate, tetradecyl(3,5-di-tert-butyl-4-hydroxy)benzoate, hexadecyl(3,5-di-tert-butyl-4-hydroxy)benzoate, octadecyl(3,5-di-tert-butyl-4-hydroxy)benzoate and behenyl(3,5-di-tert-butyl-4-hydroxy)benzoate; substituted oxanilides such as 2-ethyl-2'-ethoxyoxanilide and 2-ethoxy-4'-dodecyloxanilide; cyanoacrylates such as ethyl-a-cyano-β,β diphenyl acrylate and methyl-2-cyano-3-methyl-3-(p-methoxyphenyl)acrylate; and a variety of metal salts and metal chelates, particularly salts and chelates of nickel and chromium.

The above-described UV absorber is used in an amount of 0.001 to 5 parts by mass, more preferably 0.005 to 0.5 parts by mass, with respect to 100 parts by mass of the above-described polyester resin.

Examples of the above-described hindered amine-based light stabilizer include2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, tetrakis(2,2,6,6-tetramethyl-4-piperidyl)-1,2,3,4-butane tetracarboxylate, tetrakis(1,2,2,6,6-pentamethyl-4-piperidyl)-1,2,3,4-butane tetracarboxylate, bis(2,2,6,6-tetramethyl-4-piperidyl)·di(tridecyl)-1,2,3,4-butane tetracarboxylate, bis(1,2,2,6,6-pentamethyl-4-piperidyl)·di(tridecyl)-1,2,3,4-butane tetracarboxylate, bis(1,2,2,4,4-pentamethyl-4-piperidyl)-2-butyl-2-(3,5-di-tert-butyl-4-hydroxybenzyl)malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-tert-octylamino-s-triazine polycondensate, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12-tetrakis[2,4-bis(N-butyl-N-(1,2,2,6,6-pentamethyl-4-piperidyl)amino)-s-triazine-6-yl]-1,5,8-12-tetraazadodecane, 1,6,11-tris[2,4-bis(N-butyl-N-(2,2,6,6-tetramethyl-4-piperidyl)amino)-s-triazine-6-yl]aminoundecane, 1,6,11-tris[2,4-bis(N-butyl-N-(1,2,2,6,6-pentamethyl-4-piperidyl)amino)-s-triazine-6-yl]aminoundecane, bis {4-(1-octyloxy-2,2,6,6-tetramethyl)piperidyl}decanedionate, bis {4-(2,2,6,6-tetramethyl-1-undecyloxy)piperidyl)carbonate and TINUVIN NOR 371 manufactured by Ciba Specialty Chemicals Corporation.

The above-described hindered amine-based light stabilizer is used in an amount of 0.001 to 5 parts by mass, more preferably 0.005 to 0.5 parts by mass, with respect to 100 parts by mass of the above-described polyester resin.

Examples of the above-described other nucleating agent include metal carboxylates such as sodium benzoate, 4-tert-butyl aluminum benzoate, sodium adipate and 2-sodium-bicyclo[2.2.1]heptane-2,3-dicarboxylate; metal phosphates such as sodium-bis(4-tert-butylphenyl)phosphate, sodium-2,2'-methylenebis(4,6-di-tert-butylphenyl)phosphate and lithium-2,2'-methylenebis(4,6-di-tert-butylphenyl)phosphate; polyalcohol derivatives such as dibenzylidene sorbitol, bis(methylbenzylidene)sorbitol, bis(p-ethylbenzylidene)sorbitol and bis(dimethylbenzylidene)sorbitol; and amide compounds such as N,N',N"-tris[2-methylcyclohexyl]-1,2,3 -propane tricarboxamide, N,N',N"-tricyclohexyl-1,3,5-benzene tricarboxamide, N,N'-dicyclohexyl-naphthalene dicarboxamide and 1,3,5-tri(dimethylisopropoylamino)benzene.

The above-described other nucleating agent is used in such an amount that the total amount of the above-described other nucleating agent and the nucleating agent employed in the present invention becomes 0.1 to 30 parts by mass with respect to 100 parts by mass of the above-described polyester resin.

Examples of the above-described flame retardant include aromatic phosphates such as triphenyl phosphate,

tricresyl phosphate, trixylenyl phosphate, cresyldiphenyl phosphate, cresyl-2,6-xylenyl phosphate and resorcinol bis(diphenylphosphate); phosphonates such as divinyl phenyl phosphonate, diallyl phenyl phosphate and (1-butenyl)phenyl phosphonate; phosphinates such as diphenyl phenyl phosphinate, diphenyl methyl phosphinate and 9,10-dihydro-9-oxa-10-phosphaphenanthlene-10-oxide derivatives; phosphazene compounds such as bis(2-allylphenoxy)phosphazene and dicresylphosphazene; phosphorus-based flame retardants such as melamine phosphate, melamine pyrophosphate, melamine polyphosphate, melam polyphosphate, ammonium polyphosphate, phosphorus-containing vinylbenzyl compounds and red phosphorus; metal hydroxides such as magnesium hydroxide and aluminum hydroxide; and bromine-based flame retardants such as brominated bisphenol A-type epoxy resin, brominated phenol novo lac-type epoxy resin, hexabromobenzene, pentabromotoluene, ethylenebis(pentabromophenyl), ethylenebis-tetrabromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene, 2,4,6-tris(tribromophenoxy)-1,3,5-triazine, tribromophenyl maleimide, tribromophenyl acrylate, tribromophenyl methacrylate, tetrabromo bisphenol A-type dimethacrylate, pentabromobenzyl acrylate and brominated styrene.

The above-described flame retardant is used in an amount of 1 to 70 parts by mass, more preferably 10 to 30 parts by mass, with respect to 100 parts by mass of the above-described polyester resin.

Examples of the above-described other phosphorus-based antioxidant include triphenyl phosphite, tris(2,4-di-tert-butylphenyl)phosphite, tris(2,5-di-tert-butylphenyl)phosphite, tris(nonylphenyl)phosphite, tris(dinonylphenyl)phosphite, tris(mono-, di-mixed nonylphenyl)phosphite, diphenyl acid phosphite, 2,2'-methylenebis(4,6-di-tert-butylphenyl)octyl phosphite, diphenyldecyl phosphite, diphenyloctyl phosphite, phenyldiisodecyl phosphite, tributyl phosphite, tris(2-ethylhexyl)phosphite, tridecyl phosphite, trilauryl phosphite, dibutyl acid phosphite, dilauryl acid phosphite, trilauryl trithiophosphite, bis(neopentyl glycol)·1,4-cyclohexane dimethyl diphosphite, tetra(C12-15 mixed alkyl)-4,4'-isopropylidene diphenylphosphite, bis[2,2'-methylenebis(4,6-diamylphenyl)]·isopropylidene diphenylphosphite, tetratridecy1·4,4'-butylidenebis(2-tert-butyl-5-methylphenol)diphosphite, hexa(tridecyl)·1,1,3-tris(2-methyl-5-tert-butyl-4-hydroxyphenyl)butane·triphosphite, tetrakis(2,4-di-tert-butylphenyl)biphenylene diphosphonite, tris(2-[(2,4,7,9-tetrakis-tert-butyldibenzo[d,f][1,3,2]dioxaphosphepine-6-yl)oxy]ethyl)amine, 9,10-dihydro-9-oxa-10-phosphaphenanthrene-10-oxide and 2-butyl-2-ethylpropanedio1·2,4,6-tri-tert-butylphenol monophosphite.

The above-described other phosphorus-based antioxidant is used in such an amount that the total amount of the above-described other phosphorus-based antioxidant and the phosphorus-based antioxidant employed in the present invention becomes 0.01 to 30 parts by mass with respect to 100 parts by mass of the above-described polyester resin.

The application of the polyester resin composition according to the present invention is not particularly restricted, and it can be molded by known extrusion molding, injection molding, hollow molding or blow molding into a film, a sheet or the like to be used in beverage containers, packaging materials, daily miscellaneous goods, toys and the like.

The polyester fiber according to the present invention is characterized by being composed of a polyester resin composition which comprises, with respect to 100 parts by mass of a polyester resin, 0.001 to 1 parts by mass of a nucleating agent for polyester resins which is composed of a sulfonamide compound metal salt or sulfonimide compound metal salt.

The polyester fiber according to the present invention will now be described in detail.

The nucleating agent for polyester resins according to the present invention, which is composed of a sulfonamide compound metal salt or sulfonimide compound metal salt, refers to a metal salt of a compound having a sulfonamide skeleton or a sulfonimide skeleton. Examples of the compound having a sulfonamide skeleton or a sulfonimide skeleton include the same compounds as exemplified in the above.

In the present invention, a benzenesulfonamide metal salt, toluene-4-sulfonamide metal salt, N-phenyl-benzenesulfonamidemetal salt, N-phenyl-4-methyl-benzenesulfonamide metal salt or a of 1,2-benzisothiazol-3(2H)-one-1,1-dioxide metal salt is preferably used.

Examples of the metal in the above-described sulfonamide compound metal salt or sulfonimide compound metal salt include the same metals as exemplified for the above-described sulfonamide compound metal salt. Preferred metals are also the same as described in the above.

As the polyester resin according to the present invention, any conventional thermoplastic polyester resin may be employed, and it is not particularly restricted. Examples thereof include the same ones as exemplified in the above.

Thereamong, at least one polyester resin selected from the group consisting of polyethylene terephthalate, polyethylene naphthalate, polybutylene terephthalate and polylactic acid is preferably employed, and in particular, polyethylene terephthalate is more preferably employed since it has excellent transparency and moldability and is inexpensive.

Further, the above-described polyester resins may be used individually or in the form of a blend of a plurality thereof (for example, a blend of polyethylene terephthalate and polybutylene terephthalate) or a copolymer thereof (for example, a copolymer of polybutylene terephthalate and polytetramethylene glycol); however, in particular, one having a melting point of 200°C to 300°C is preferably used since such polyester resin exhibits a heat resistant characteristic.

The above-described nucleating agent for polyester resins which is composed of a sulfonamide compound

metal salt or sulfonimide compound metal salt is added in an amount of 0.001 to 1 parts by mass, preferably 0.005 to 1 parts by mass, with respect to 100 parts by mass of the polyester resin. When the amount is less than 0.001 parts by mass, the action and effect as a nucleating agent are low, while when the amount is greater than 1 part by mass, the polyester fiber may not be sufficiently stretched due to a reduction in dispersion of the nucleating agent in the polyester resin.

In the present invention, it is preferred that the above-described polyester fiber have a thermal contraction rate (measured in accordance with the Deutsche Industrie Normen DIN 53866 T3) of not higher than 15%. When the thermal contraction rate is higher than 15%, it may become difficult to produce a material suitable for an intended use.

In the present invention, it is preferred that the above-described polyester fiber be stretch-oriented. As the stretching method, a known stretching method can be employed, and the polyester fiber can be stretched without any restriction on the draw ratio as long as it is within the range where the fiber is not severed.

In the polyester resin blended with the nucleating agent for polyester resins which is composed of a sulfonamide compound metal salt or sulfonimide compound metal salt, other conventional additive(s) may be further blended as required. Examples of the method of blending other additive(s) include a method in which other additive(s) is/are mixed with the polyester resin in an amount suitable for the purpose thereof and the resultant is then melt-kneaded and granulated using a molding machine such as an extruder. The nucleating agent for polyester resins which is composed of a sulfonamide compound metal salt or sulfonimide compound metal salt may be blended together with other additive(s). Alternatively, other additive(s) may be added after blending the nucleating agent for polyester resins which is composed of a sulfonamide compound metal salt or sulfonimide compound metal salt to the polyester resin and molding a fiber from the resultant.

Examples of such other additive(s) include anti-coloring agents, fluorescent brighteners, matting agents, phenolic antioxidants, phosphorus-based antioxidants, UV absorbers, hindered amine compounds, heavy metal inactivators, nucleating agents other than the nucleating agent for polyester resins used in the present invention, flame retardants, metallic soaps, hydrotalcites, fillers, lubricants, antistatic agents, pigments, dyes and plasticizers.

Examples of the above-described phenolic antioxidant include 2,6-di-tert-butyl-p-cresol, 2,6-diphenyl-4-octadesiloxyphenol, stearyl(3,5-di-tert-butyl-4-hydroxyphenyl)propionate, distearyl(3,5-di-tert-butyl-4-hydroxybenzyl)phosphonate, tridecyl-3,5-di-tert-butyl-4-hydroxybenzyl thioacetate, thiodiethylenebis[(3,5-di-tert-butyl-4-hydroxyphenyl)propionate], 4,4'-thiobis(6-tert-butyl-m-cresol), 2-octylthio-4,6-di(3,5-di-tert-butyl-4-hydroxyphenoxy)-s-triazine, 2,2'-methylenebis(4-methyl-6-tert-butylphenol), bis[3,3-bis(4-hydroxy-3-tert-butylphenyl)butylic acid]glycol ester, 4,4'-butylidenebis(2,6-di-tert-butylphenol), 4,4'-butylidenebis(6-tert-butyl-3-methylphenol), 2,2'-ethylidenebis(4,6-di-tert-butylphenol), 1,1,3-tris(2-methyl-4-hydroxy-5-tert-butylphenyl)butane, bis[2-tert-butyl-4-methyl-6-(2-hydroxy-3-tert-butyl-5-methylbenzyl)phenyl]terephthalate, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 1,3,5-tris[(3,5-di-tert-butyl-4-hydroxyphenyl)propionyloxyethyl]isocyanurate, tetrakis[methylene-3-(3',5'-di-tert-butyl-4'-hydroxyphenyl)propionate]methane, 2-tert-butyl-4-methyl-6-(2-acroyloxy-3-tert-butyl-5-methylbenzyl)phenol, 3,9-bis[2-(3-tert-butyl-4-hydroxy-5-methylhydrocinnamoyloxy) -1,1-dimethylethyl]-2,4,8,10-tetraoxaspiro[5.5]undecane and triethylene glycolbis[β-(3-tert-butyl-4-hydroxy-5-methylphenyl)propionate].

The above-described phenolic antioxidant is used in an amount of 0.001 to 10 parts by mass, more preferably 0.01 to 5 parts by mass, with respect to 100 parts by mass of the above-described polyester resin.

Examples of the above-described phosphorus-based antioxidant include the same ones as exemplified in the above.

The above-described phosphorus-based antioxidant is used in an amount of 0.001 to 10 parts by mass, more preferably 0.01 to 5 parts by mass, with respect to 100 parts by mass of the above-described polyester resin.

Examples of the above-described UV absorber include the same ones as exemplified in the above.

The above-described UV absorber is used in an amount of 0.001 to 5 parts by mass, more preferably 0.005 to 0.5 parts by mass, with respect to 100 parts by mass of the above-described polyester resin.

Examples of the above-described hindered amine-based light stabilizer include the same ones as exemplified in the above.

The above-described hindered amine-based light stabilizer is used in an amount of 0.001 to 5 parts by mass, more preferably 0.005 to 0.5 parts by mass, with respect to 100 parts by mass of the above-described polyester resin.

Examples of the above-described other nucleating agent include simple substances such as carbon black, graphite, zinc powder and aluminum powder; metal oxides such as zinc oxide, magnesium oxide, alumina, hematite, magnetite; clays and minerals such as talc, asbestos, kaolin, montmorillonite, clay and pyrophyllite; sulfates such as calcium sulfate and barium sulfate; inorganic phosphates such as calcium phosphate; metal salts of aromatic oxysulfonic acid; organic phosphates such as magnesium salts of organic phosphorus compounds and zinc salt of organic phosphorus compounds; inorganic silicates such as calcium silicate and magnesium silicate; metal carboxylates such as sodium monocarboxylate, lithium monocarboxylate, barium monocarboxylate, magnesium monocarboxylate, calcium monocarboxylate, sodium stearate, sodium montanate, sodium benzoate, potassium benzoate, calcium benzoate, 4-tert-butyl

aluminum benzoate, sodium adipate, 2-sodium-bicyclo[2.2.1]heptane-2,3-dicarboxylate, sodium carbonate and magnesium carbonate; metal phosphates such as sodium-bis(4-tert-butylphenyl)phosphate, sodium-2,2'-methylenebis(4,6-di-tert-butylphenyl)phosphate and lithium-2,2'-methylenebis(4,6-di-tert-butylphenyl)phosphate; polyalcohol derivatives such as dibenzylidene sorbitol, bis(methylbenzylidene)sorbitol, bis(p-ethylbenzylidene)sorbitol and bis(dimethylbenzylidene)sorbitol; amide compounds such as N,N',N"-tris[2-methylcyclohexyl]-1,2,3-propane tricarboxamide, N,N',N"-tricyclohexyl-1,3,5-benzene tricarboxamide, N,N'-dicyclohexyl-naphthalene dicarboxamide and 1,3,5-tris(2,2-dimethylpropionylamino)benzene; and polymeric substances such as polycaprolactones, polyglycols, polyolefins, nylon 6, polytetrafluoroethylene powder, high-melting point PETs and alkaline metal salts of polyester oligomer.

The above-described other nucleating agent is used in such an amount that the total amount of the above-described other nucleating agent and the nucleating agent employed in the present invention becomes 0.001 to 1 parts by mass with respect to 100 parts by mass of the above-described polyester resin.

Examples of the above-described flame retardant include the same ones as exemplified in the above.

The above-described flame retardant is used in an amount of 1 to 70 parts by mass, more preferably 10 to 30 parts by mass, with respect to 100 parts by mass of the above-described polyester resin.

The above-described filler is not particularly restricted as long as it is one used for reinforcement of a polyester resin, and examples thereof include mineral fibers such as wollastonite, xonotlite and attapulgite; glass fibers such as glass fiber, milled fibers and metal-coated glass fibers; carbon fibers such as carbon fiber, carbon milled fibers and metal-coated carbon fibers; steel wires such as stainless steel wires, copper wires, aluminum wires and tungsten wires; fibrous fillers including alumina fibers, zirconia fibers and a variety of whiskers such as aluminum borate whiskers, potassium titanate whiskers, basic magnesium sulfate whiskers, acicular titanium oxide and acicular calcium carbonate; plate-form fillers such as talc, mica, glass flakes and graphite flakes; and a variety of other fillers such as hydrotalcites, glass beads, glass balloons, ceramic balloons, carbon beads, silica particles, titania particles, aluminum particles, kaolin, clay, calcium carbonate, titanium oxide, cerium oxide and zinc oxide. Two or more of these fillers may be used in combination as well.

The above-described fillers may be used as appropriate in such an amount that does not impair the characteristics of the polyester fiber.

The polyester fiber according to the present invention may be subjected to twisting, treatment with an adhesive, heat treatment and/or alkali treatment by a conventional method, and the polyester fiber may also be made into a twisted fiber with other fiber material. As such other fiber material, one which easily intertwines with the polyester fiber and hardly breaks is preferably used.

The polyester fiber according to the present invention can be utilized in applications such as vehicle tire structures, printing substrates, wallpaper substrates, wiping materials, various filter materials, poultice materials, medical hygienic materials such as sanitary items, clothings, clothing interliners, pillowcases, cosmetic base materials, automobile interior materials, acoustic insulating materials, packaging materials and industrial materials used in civil engineering and the like.

The polyester resin molded article according to the present invention is characterized by being subjected to an annealing treatment for 1 second to 2 minutes after molding of a polyester resin composition comprising, with respect to 100 parts by mass of a polyester resin, 0.001 to 1 parts by mass of a nucleating agent for polyester resins which is composed of a sulfonamide compound metal salt or sulfonimide compound metal salt.

The polyester resin molded article according to the present invention and production method thereof will now be described in detail.

The nucleating agent for polyester resins according to the present invention, which is composed of a sulfonamide compound metal salt or sulfonimide compound metal salt, refers to a metal salt of a compound having a sulfonamide skeleton or a sulfonimide skeleton. Examples of the compound having a sulfonamide skeleton or a sulfonimide skeleton include the same compounds as exemplified for the sulfonamide compound metal salt relating to the above-described polyester fiber. Preferred compounds having a sulfonamide skeleton or a sulfonimide skeleton are also the same as exemplified in relation to the above-described polyester fiber.

Examples of the metal in the above-described sulfonamide compound metal salt or sulfonimide compound metal salt include the same metals as exemplified for the above-described sulfonamide compound metal salt. Preferred metals are also the same as described in the above.

In the present invention, as the polyester resin, any conventional thermoplastic polyester resin may be employed, and it is not particularly restricted. Examples thereof include the same ones as exemplified in the above. In particular, polyethylene terephthalate is preferably employed since it has excellent transparency and is inexpensive.

Further, the above-described polyester resins may be used individually or in the form of a blend of a plurality thereof (for example, a blend of polyethylene terephthalate and polybutylene terephthalate) or a copolymer thereof (for example, a copolymer of polybutylene terephthalate and polytetramethylene glycol); however, in particular, one having a melting point of 200°C to 300°C is preferably used since such polyester resin exhibits a heat resistant characteristic.

The above-described nucleating agent for polyester resins is added in an amount of 0.001 to 1 parts by mass,

preferably 0.005 to 1 parts by mass, more preferably 0.005 to 0.05 parts by mass, with respect to 100 parts by mass of the polyester resin. When the amount is less than 0.001 parts by mass, the action and effect as a nucleating agent are hardly attained, while when the amount is greater than 1 part by mass, the outer appearance of the resulting polyester resin molded article may be adversely affected due to a reduction in dispersion of the nucleating agent in the polyester resin.

In the polyester resin blended with the nucleating agent for polyester resins which is composed of a sulfonamide compound metal salt or sulfonimide compound metal salt, other conventional additive(s) may be further blended as required. Examples of the method of blending other additive(s) include a method in which other additive(s) is/are mixed with the polyester resin in an amount suitable for the purpose thereof and the resultant is then melt-kneaded and granulated using a molding machine such as an extruder. The nucleating agent for polyester resins which is composed of a sulfonamide compound metal salt or sulfonimide compound metal salt may be blended together with other additive(s). Alternatively, other additive(s) may be added after molding the polyester resin blended with the nucleating agent for polyester resins which is composed of a sulfonamide compound metal salt or sulfonimide compound metal salt, and the resultant may be further molded using a molding machine.

Examples of such other additive(s) include phenolic antioxidants, phosphorus-based antioxidants, UV absorbers, hindered amine compounds, heavy metal inactivators, nucleating agents other than the one used in the present invention, flame retardants, metallic soaps, hydrotalcites, fillers, lubricants, antistatic agents, pigments, dyes and plasticizers.

Examples of the above-described phenolic antioxidant include the same ones as exemplified in the above.

The above-described phenolic antioxidant is used in an amount of 0.001 to 10 parts by mass, more preferably 0.01 to 5 parts by mass, with respect to 100 parts by mass of the above-described polyester resin.

Examples of the above-described phosphorus-based antioxidant include the same ones as exemplified in the above.

The above-described phosphorus-based antioxidant is used in an amount of 0.001 to 10 parts by mass, more preferably 0.01 to 5 parts by mass, with respect to 100 parts by mass of the above-described polyester resin.

Examples of the above-described UV absorber include the same ones as exemplified in the above.

The above-described UV absorber is used in an amount of 0.001 to 5 parts by mass, more preferably 0.005 to 0.5 parts by mass, with respect to 100 parts by mass of the above-described polyester resin.

Examples of the above-described hindered amine-based light stabilizer include the same ones as exemplified in the above.

The above-described hindered amine-based light stabilizer is used in an amount of 0.001 to 5 parts by mass, more preferably 0.005 to 0.5 parts by mass, with respect to 100 parts by mass of the above-described polyester resin.

Examples of the above-described other nucleating agent include the same ones as exemplified in the above.

The above-described other nucleating agent is used in such an amount that the total amount of the above-described other nucleating agent and the nucleating agent employed in the present invention becomes 0.001 to 1 parts by mass with respect to 100 parts by mass of the above-described polyester resin.

Examples of the above-described flame retardant include the same ones as exemplified in the above.

The above-described flame retardant is used in an amount of 1 to 70 parts by mass, more preferably 10 to 30 parts by mass, with respect to 100 parts by mass of the above-described polyester resin.

In the present invention, the method of molding the polyester resin is not particularly restricted, and any known molding method such as extrusion molding, injection molding, hollow molding, blow molding, film molding or sheet molding can be employed. In cases where the polyester resin is extrusion molded, as a temperature condition of the extrusion molding machine, it is preferred that the screw temperature be not higher than the above-described polyester resin's melting point plus 50°C. When the screw temperature is excessively low, the molding process may become unstable and an overload may easily occur, while when the screw temperature is excessively high, the resin may be thermally decomposed, leading to deterioration in the physical properties of the resulting molded article and coloring thereof. Therefore, such excessively low or high screw temperature is not preferred.

In the present invention, stretching of polyester resin molded article means to, after pre-molding a polyester resin, stretch the resin uniaxially or biaxially by applying a stress in such a manner to elongate the resin in the stretching direction, or to stretch the resin in the form of a cylinder (bottle container). Such stretching is usually carried out at a temperature of 80 to 200°C.

In the present invention, the above-described annealing treatment refers to heating of the polyester resin molded article for 1 second to 2 minutes at a temperature of not lower than the glass transition temperature of the polyester resin and not higher than the melting point thereof. The crystallinity of the polyester resin molded article can be improved even when such annealing treatment is carried out for a short duration of less than 1 second or so; however, in order to attain a constant annealing effect from the standpoint of the quality control, it is preferred that the annealing treatment be carried out for not less than 1 second. When the annealing treatment is carried out for longer than 2 minutes, the polyester resin may become excessively crystallized to be whitened and lose its transparency.

When the heating temperature is lower than the glass transition temperature, the crystallinity of the polyester resin molded article is hardly improved, while when it is higher than the melting point, the polyester resin is melted, so that the outer appearance of the polyester resin molded article cannot be maintained. The heating temperature is preferably 100 to 200°C, more preferably 110 to 190°C, still more preferably 120 to 180°C.

The heating method is not particularly restricted and a method by which the whole polyester resin molded article can be uniformly heated is preferred; however, a method in which the polyester resin molded article is partially heated or plural sections thereof are heated may also be employed.

In addition, the annealing treatment can be carried out for a plurality of times at different temperatures, as long as these temperatures do not deteriorate the outer appearance of the polyester resin molded article.

In the present invention, the above-described polyester resin molded article refers to a molded article obtained by a known molding method such as extrusion molding, injection molding, hollow molding, blow molding, film molding or sheet molding, and it can be used not only in bottles and packaging materials, but also in beverage bottles, food containers, cosmetic and pharmaceutical containers, food packaging materials, wrapping materials, sheets and films, protection sheets of electrical appliances, transportation packaging materials, protection films of electronic materials, daily miscellaneous goods, toys and the like.

The polyester resin molded article according to the present invention preferably has a carbon dioxide gas permeability coefficient of $1.0 \times 10^{-17}$ mol·m/m$^2$·s·Pa to $5.3 \times 10^{-17}$ mol·m/m$^2$·s·Pa.

It is not preferred to use a polyester resin molded article having a carbon dioxide gas permeability coefficient of greater than $5.3 \times 10^{-17}$ mol·m/m$^2$·s·Pa as a packaging material or the like since the content may be oxidized or degenerated, leading to rapid deterioration of the taste, freshness, efficacy and the like. On the other hand, a polyester resin molded article having a carbon dioxide gas permeability coefficient of lower than $1.0 \times 10^{-17}$ mol·m/m$^2$·s·Pa is also not preferred since the production thereof is difficult under practical molding conditions. The carbon dioxide gas permeability coefficient can be measured in accordance with JIS K7126-1.

The method of producing a nucleating agent for polyester resins according to the present invention is a method of producing a nucleating agent for polyester resins which is composed of a sulfonamide compound metal salt or sulfonimide compound metal salt, which method is characterized in that the above-described nucleating agent for polyester resins is dried to a percent water content of not higher than 8% by mass and then pulverized by a pulverizer not utilizing a grinding medium.

The pulverization method according to the present invention will now be described in detail.

The nucleating agent for polyester resins according to the present invention, which is composed of a sulfonamide compound metal salt or sulfonimide compound metal salt, refers to a metal salt of a compound having a sulfonamide skeleton or a sulfonimide skeleton. Examples of the compound having a sulfonamide skeleton or a sulfonimide skeleton include the same compounds as exemplified for the sulfonamide compound metal salt relating to the above-described polyester fiber. Preferred compounds having a sulfonamide skeleton or a sulfonimide skeleton are also the same as exemplified in relation to the above-described polyester fiber.

Examples of the metal in the above-described sulfonamide compound metal salt or sulfonimide compound metal salt include the same metals as exemplified for the above-described sulfonamide compound metal salt. Preferred metals are also the same as described in the above.

In the present invention, as a method of drying the nucleating agent for polyester resins to a percent water content of not higher than 8% by mass, a known dryer can be employed. Examples of the dryer used in the present invention include spray dryer, vacuum-freeze dryer, vacuum dryer, stationary shelf dryer, mobile shelf drier, fluidized-bed dryer, rotary dryer and stirring-type dryer.

The percent water content of the above-described nucleating agent for polyester resins was evaluated using Thermo Plus 2 manufactured by Rigaku Corporation in terms of the ratio of the water content and the weight of the measurement sample with the water content being defined as the amount of decrease in the weight of the measurement sample (5 mg) when the temperature thereof was raised from room temperature to 150°C under a nitrogen atmosphere (flow rate: 200 ml/min) at a heating rate of 50°C /min. In the present invention, the nucleating agent for polyester resins may be dried to a percent water content of not higher than 8% by mass, and it is preferred that the drying be carried out to a percent water content of not higher than 5% by mass. When the percent water content is higher than 8% by mass, a longer time may be required for pulverizing the nucleating agent for polyester resins by the above-described pulverizer, which results in deterioration of the pulverization efficiency, and the pulverized products may aggregate with each other in the pulverizing vessel. Also, the pulverized products may adhere and be deposited to the reaction vessel, or secondary aggregation may occur after pulverization. Further, it is uneconomical to perform the drying to a percent water content of less than 0.01 % by mass; therefore, in the pulverization method according to the present invention, the drying is carried out to a percent water content of 0.01 to 8% by mass.

In the method of producing a nucleating agent for polyester resins according to the present invention, the above-described nucleating agent for polyester resins is dried to a percent water content of not higher than 8% by mass and then pulverized by a pulverizer not utilizing a grinding medium. In the present invention, the grinding medium refers to

a solid medium and examples thereof include non-metal media such as glass, agate and ceramics such as silicon nitride, zirconia and steatite; metal media such as alumina and titania; and alloy media such as tungsten carbide, chrome steel and stainless steel. The form of the grinding medium is not restricted and examples thereof include beads and ball-shape.

The pulverizer used in the present invention is not particularly restricted as long as it does not utilize the above-described grinding media. Examples of such pulverizer include those which utilize roll-type method, high speed rotation-impact type method, air flow-type method or shearing-grinding type method, and a pulverizer utilizing these pulverization methods in combination may also be employed. Such pulverizers may be joined and a system incorporating a classification mechanism may also be employed.

Examples of the above-described roll-type pulverizer include roll rotary mills in which pulverization is performed between rotating rolls; and rotating roller-type mills in which a roller rolls on a table or in a container.

Examples of the above-described high speed rotation-impact type pulverizer include those in which a sample is collided against a rotor revolving at a high speed to achieve microparticulation of the sample by the impact force, such as hammer mill-type pulverizers in which a fixed or swinging impactor is attached to a rotor; rotary disc-type pin mills in which a pin or impacting head is attached to a revolving disc; axial-flow type pulverizers in which a sample is pulverized while being conveyed in the direction of the shaft; and annular-type pulverizers in which particles are refined in a narrow annular section.

The above-described air flow-type pulverizer (jet mill) refers to one which utilizes the kinetic energy of high speed air flow to accelerate and crash a sample to achieve pulverization thereof, and examples of such pulverizer include those in which particles are directly collided against a collision plate; and those in which pulverization is principally performed by microparticulation attained by friction between particles.

Examples of the above-described shearing-grinding type pulverizer include grinding-type pulverizers which utilize shear frictional force under a compressive force.

Examples of a medium-type pulverizer which utilizes a grinding medium include container driving-type mills in which a container rotates or vibrates to drive a grinding medium therein; and medium stirring-type mills in which kinetic energy is imparted to a medium by a stirring mechanism provided inside a container. Examples of the above-described container driving-type mill include rotary ball mills such as ball mills; vibration mills; centrifugal mills; planetary mills; and high-swing mills, and examples of the above-described stirring-type mill include, based on the container shape, tower-type, stirring vessel-type, circulation tube-type and annular-type.

In the present invention, the above-described nucleating agent for polyester resins is pulverized by a pulverizer not utilizing the above-described grinding medium to a volume average particle size of preferably 0.5 to 50 μm, more preferably 1 μm to 30 μm, and a 250 μm mesh-pass of preferably not less than 90% by mass, more preferably not less than 95% by mass.

It is not economical to pulverize the nucleating agent to a volume average particle size of smaller than 0.5 μm since the energy required therefor becomes large, while at a volume average particle size of larger than 50 μm, when the pulverized nucleating agent is added to a polyester resin and the resultant is molded, the pulverized nucleating agent may not disperse in the polyester resin and aggregation may occur, resulting in deterioration of the outer appearance of the resulting molded article. Further, when the 250 μm mesh-pass is less than 90% by mass, coarse particles may not be completely melted and remain in the polyester resin at the time of melt-kneading with the polyester resin, adversely affecting the outer appearance and physical properties of the resulting molded article.

Further, in the pulverization method according to the present invention, the recovery rate of the above-described pulverized nucleating agent for polyester resins is preferably not lower than 90%, more preferably not less than 95%. When the recovery rate is less than 90%, the pulverized nucleating agent may be deposited in the pulverizing vessel of the above-described pulverizer, causing a problem in the pulverization process.

In the present invention, it is preferred that the above-described pulverized nucleating agent for polyester resins be further dried to a percent water content of not higher than 1% by mass. In cases where a nucleating agent having a percent water content of higher than 1% by mass is added to the polyester resin and the resultant is molded, form formation may occur to deteriorate the outer appearance of the resulting molded article. In addition, it is uneconomical to perform the drying to a percent water content of less than 0.01 % by mass. As the drying method, a known drying method can be employed in the same manner as described in the above.

When the pulverized product is aggregated by a weak interparticle attractive force, it is preferred to perform a crushing treatment on the aggregate before using the pulverized product. As the apparatus therefor, a known crushing apparatus may be employed, and examples thereof include a jet mill and Henschel mixer.

As the polyester resin according to the present invention, any conventional thermoplastic polyester resin may be employed, and it is not particularly restricted. Examples thereof include the same ones as exemplified in the above. In particular, polyethylene terephthalate is preferably employed since it has excellent transparency and is inexpensive.

Thereamong, at least one polyester resin selected from the group consisting of polyethylene terephthalate, polyethylene naphthalate, polybutylene terephthalate and polylactic acid is preferably employed, and in particular, polyethylene terephthalate is more preferably employed since it has excellent transparency and is inexpensive.

Further, the above-described polyester resins may be used individually or in the form of a blend of a plurality thereof (for example, a blend of polyethylene terephthalate and polybutylene terephthalate) or a copolymer thereof (for example, a copolymer of polybutylene terephthalate and polytetramethylene glycol); however, in particular, one having a melting point of 200°C to 300°C is preferably used since such polyester resin exhibits a heat resistant characteristic.

The nucleating agent for polyester resins is added in an amount of 0.001 to 1 parts by mass, more preferably 0.005 to 0.05 parts by mass, with respect to 100 parts by mass of the polyester resin. When the amount is less than 0.001 parts by mass, the action and effect as a nucleating agent are low, while when the amount is greater than 1 part by mass, the outer appearance and physical properties of the resulting molded article may be adversely affected due to a reduction in dispersion of the nucleating agent in the polyester resin.

In the polyester resin blended with the above-described nucleating agent, other conventional additive(s) may be further blended as required. Examples of the method of blending other additive(s) include a method in which other additive(s) is/are mixed with the polyester resin in an amount suitable for the purpose thereof and the resultant is then melt-kneaded and granulated using a molding machine such as an extruder. The above-described nucleating agent for polyester resins which may be blended together with other additive(s). Alternatively, other additive(s) may be added after molding the polyester resin blended with the above-described nucleating agent for polyester resins and the resultant may be further molded using a molding machine.

Examples of such other additive(s) include phenolic antioxidants, phosphorus-based antioxidants, UV absorbers, hindered amine compounds, heavy metal inactivators, nucleating agents other than the one used in the present invention, flame retardants, metallic soaps, hydrotalcites, fillers, lubricants, antistatic agents, pigments, dyes and plasticizers.

Examples of the above-described phenolic antioxidant include the same ones as exemplified in the above.

The above-described phenolic antioxidant is used in an amount of 0.001 to 10 parts by mass, more preferably 0.01 to 5 parts by mass, with respect to 100 parts by mass of the above-described polyester resin.

Examples of the above-described phosphorus-based antioxidant include the same ones as exemplified in the above.

The above-described phosphorus-based antioxidant is used in an amount of 0.001 to 10 parts by mass, more preferably 0.01 to 5 parts by mass, with respect to 100 parts by mass of the above-described polyester resin.

Examples of the above-described UV absorber include the same ones as exemplified in the above.

The above-described UV absorber is used in an amount of 0.001 to 5 parts by mass, more preferably 0.005 to 0.5 parts by mass, with respect to 100 parts by mass of the above-described polyester resin.

Examples of the above-described hindered amine-based light stabilizer include the same ones as exemplified in the above.

The above-described hindered amine-based light stabilizer is used in an amount of 0.001 to 5 parts by mass, more preferably 0.005 to 0.5 parts by mass, with respect to 100 parts by mass of the above-described polyester resin.

Examples of the above-described other nucleating agent include the same ones as exemplified in the above.

The above-described other nucleating agent is used in such an amount that the total amount of the above-described other nucleating agent and the nucleating agent employed in the present invention becomes 0.001 to 1 parts by mass with respect to 100 parts by mass of the above-described polyester resin.

Examples of the above-described flame retardant include the same ones as exemplified in the above.

The above-described flame retardant is used in an amount of 1 to 70 parts by mass, more preferably 10 to 30 parts by mass, with respect to 100 parts by mass of the above-described polyester resin.

In the method of molding the polyester resin according to the present invention is not particularly restricted, and any known molding method such as extrusion molding, injection molding, hollow molding, blow molding, film molding or sheet molding can be employed. In cases where the polyester resin is extrusion molded, as a temperature condition of the extrusion molding machine, it is preferred that the screw temperature be not higher than the resin's melting point plus 50°C. When the screw temperature is excessively low, the molding process may become unstable and an overload may easily occur, while when the molding temperature is excessively high, the resin may be thermally decomposed, leading to deterioration in the physical properties of the resulting molded article and coloring thereof. Therefore, such excessively low or high screw temperature is not preferred.

After molding the polyester resin composition according to the present invention, the resulting molded article may also be subjected to an annealing treatment. The annealing treatment refers to a heat treatment of the molded article for 1 second to 2 minutes at a temperature of not lower than the glass transition temperature of the polyester resin and not higher than the melting point thereof. The crystallinity of the molded article can be improved even when such annealing treatment is carried out for a short duration of less than 1 second or so; however, in order to attain a constant annealing effect from the standpoint of the quality control, it is preferred that the annealing treatment be carried out for not less than 1 second. When the annealing treatment is carried out for longer than 2 minutes, the molded article may become excessively crystallized to be whitened and lose its transparency.

When the heating temperature of the above-described annealing treatment is not higher than the glass transition

temperature, the crystallinity of the molded article is hardly improved, while when it is not lower than the melting point, the molded article is melted, so that the outer appearance thereof cannot be maintained. The heating temperature is more preferably in the range of the glass transition temperature to the glass transition temperature + 150°C, particularly preferably in the range of the glass transition temperature + 50°C to the glass transition temperature + 120°C.

The heating method is not particularly restricted and a method by which the whole molded article can be uniformly heated is preferred; however, a method in which the molded article is partially heated or plural sections thereof are heated may also be employed. In addition, the annealing treatment can be carried out for a plurality of times at different temperatures, as long as these temperatures do not deteriorate the outer appearance of the molded article.

The polyester resin composition according to the present invention may be used not only in bottles and packaging materials, but also in beverage bottles, food containers, cosmetic and pharmaceutical containers, food packaging materials, wrapping materials, sheets and films, protection sheets of electrical appliances, transportation packaging materials, protection films of electronic materials, daily miscellaneous goods, toys and the like.

The method of producing a plastic bottle according to the present invention is a method of producing a plastic bottle by molding a polyester resin composition comprising a nucleating agent for polyester resins which is composed of a sulfonamide compound metal salt or sulfonimide compound metal salt, which method is characterized in that a masterbatch which comprises 0.1 to 90 parts by mass of the above-described nucleating agent for polyester resins with respect to 100 parts by mass of a polyester resin having an intrinsic viscosity of 0.5 to 1.1 dL/g is prepared and the thus obtained masterbatch is then mixed with the polyester resin to prepare a resin composition which comprises 0.005 to 0.025 parts by mass of the above-described nucleating agent for polyester resins with respect to 100 parts by mass of the polyester resin having an intrinsic viscosity of 0.5 to 1.1 dL/g, followed by stretch-blow molding of the thus prepared resin composition into the form of a bottle at a die temperature of 85 to 160°C.

The polyester resin used in the present invention is not particularly restricted, and examples thereof include the same ones as exemplified in the above. Thereamong, polyethylene terephthalate and polybutylene terephthalate are preferably employed since they have good transparency.

Further, in the present invention, the above-described polyester resins may be used individually or in the form of a blend of a plurality thereof (for example, a blend of polyethylene terephthalate and polybutylene terephthalate) or a copolymer thereof.

Examples of more preferred polyester resin include those which are produced by performing a polycondensation reaction of a product obtained by a transesterification reaction between dimethyl terephthalate and ethylene glycol or an esterification reaction of terephthalic acid and ethylene glycol. The polycondensation reaction is usually carried out under reduced pressure of 1 hectopascal at a temperature of 265 to 300°C, preferably 270 to 290°C. It is noted here that this step may be carried out batchwise or continuously.

In cases where the polyester resin is produced by the above-described transesterification reaction, a transesterification catalyst is required. The transesterification catalyst is not particularly restricted and examples thereof include those which are generally and widely used as a catalyst for transesterification reaction of polyethylene terephthalate, such as manganese compounds, calcium compounds, magnesium compounds, titanium compounds, zinc compounds, cobalt compounds, sodium compounds, potassium compounds, cerium compounds and lithium compounds.

In cases where the polyester resin is produced by the above-described esterification reaction, since the dicarboxylic acid itself, which is the starting material, has a catalytic activity, it is optional to add a catalyst compound separately from the starting material.

The polycondensation catalyst used in the above-described polycondensation reaction is not particularly restricted. Examples thereof include antimony compounds, germanium compounds, titanium compounds, tin compound and aluminum compounds, and one or two or more of such catalysts may be used.

Examples of the above-described antimony compound include antimony trioxide, antimony pentoxide, antimony acetate and antimony glycoxide.

Examples of the above-described germanium compound include germanium dioxide and germanium tetrachloride.

Examples of the above-described titanium compound include tetra-n-propyl titanate; tetraisopropyl titanate; tetra-n-butyl titanate; tetraisobutyl titanate; tetra-tert-butyl titanate; tetracyclohexyl titanate; tetraphenyl titanate; tetrabenzyl titanate; lithium oxalate titanate; potassium oxalate titanate; ammonium oxalate titanate; titanium oxide; complex oxides of titanium and silicon, zirconium, alkali metal or alkaline earth metal; ortho esters or condensed ortho esters of titanium; reaction products between an ortho ester or condensed ortho ester of titanium and hydroxy carboxylic acid; reaction products of an ortho ester or condensed ortho ester of titanium with a hydroxy carboxylic acid and a phosphorus compound; and reaction products of an ortho ester or condensed ortho ester of titanium with a polyhydric alcohol having at least two hydroxyl groups, a 2-hydroxycarboxylic acid and a base.

Examples of the above-described tin compound include dibutyl tin oxide, methylphenyl tin oxide, tetraethyl tin oxide, hexaethyl ditin oxide, triethyl tin hydroxide, monobutylhydroxy tin oxide, triisobutyl tin acetate, diphenyl tin dilaurate, monobutyl tin trichloride, dibutyl tin sulfide, dibutylhydroxy tin oxide, methylstannoic acid and ethylstannoic acid.

Examples of the above-described aluminum compound include carboxylates such as aluminum formate, aluminum acetate, basic aluminum acetate, aluminum propionate, aluminum oxalate, aluminum acrylate, aluminum laurate, aluminum stearate, aluminum benzoate, aluminum trichloroacetate, aluminum lactate, aluminum citrate, aluminum tartrate and aluminum salicylate; and inorganic acid salts such as aluminum chloride, aluminum hydroxide, aluminum hydroxychloride, aluminum nitrate, aluminum sulfate, aluminum carbonate, aluminum phosphate and aluminum phosphonate.

Further, in the above-described polycondensation reaction, an acid component and/or glycol component may be added as a copolymerization component in such an amount that does not impair the resin characteristics.

Examples of the acid component include isophthalic acid, adipic acid, sebacic acid, glutaric acid, diphenylmethane dicarboxylic acid, dimer acid, 2,6-naphthalene dicarboxylic acid and 4,4'-biphenyl dicarboxylic acid, and examples of the glycol component include diethylene glycol, 1,3-propanediol, 1,4-butanediol, hexamethylene glycol, 1,4-cyclohexane dimethanol, bisphenol A, and ethylene oxide adduct or neopentyl glycol-alkylene oxide adduct of bisphenol S. Thereamong, it is preferred that isophthalic acid and diethylene glycol be copolymerized as the acid component and glycol component, respectively, in an amount of not more than 15 mol%.

A stabilizer may be supplied prior to the above-described polycondensation reaction. Examples of the stabilizer include phosphorus compounds such as dimethyl esters, diethyl esters, dipropyl esters and dibutyl esters of carbomethoxymethane phosphonate, carboethoxymethane phosphonate, carbopropoxymethane phosphonate, carbobutoxymethane phosphonate, carbomethoxy-phosphono-phenylacetate and carbobutoxy-phosphono-phenylacetate.

The polyester resin used in the present invention is preferably a polyethylene terephthalate having an intrinsic viscosity of 0.5 to 1.1 dL/g, particularly 0.8 to 1.0 dL/g. When the intrinsic viscosity is less than 0.5 dL/g, there are problems of deterioration in the physical properties of the resulting molded article, occurrence of whitening thereof and insufficient heat resistance, while when the intrinsic viscosity is greater than 1.1 dL/g, there are problems, for example, that molding at a high temperature becomes necessary and that the preform cannot be stretch-blow molded; therefore, such intrinsic viscosities are not preferred.

Among the polyester resins which may be used in the present invention, a polyethylene terephthalate having a glass transition temperature of 50 to 90°C and a melting point of 200 to 280°C is suitable since it has excellent heat resistance, pressure resistance and heat-pressure resistance.

In the present invention, the nucleating agent for polyester resins which is composed of a sulfonamide compound metal salt or sulfonimide compound metal salt refers to a metal salt of a compound having a sulfonamide skeleton or a sulfonimide skeleton. Examples of the compound having a sulfonamide skeleton or a sulfonimide skeleton include the same compounds as exemplified for the sulfonamide compound metal salt relating to the above-described polyester fiber. Preferred compounds having a sulfonamide skeleton or a sulfonimide skeleton are also the same as exemplified in relation to the above-described polyester fiber.

In particular, the nucleating agent for polyester resins which is composed of a sulfonamide compound metal salt or sulfonimide compound metal salt is preferably a compound represented by the following Formula (2):

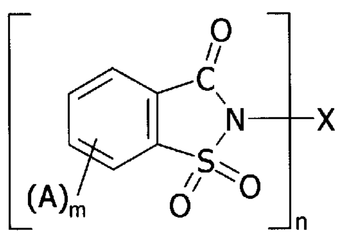
(2)

(wherein, A represents a halogen atom, a $C_1$-$C_8$ alkyl group which is optionally substituted, a $C_1$-$C_8$ alkoxy group which is optionally substituted, a $C_1$-$C_5$ alkylthio group, a nitro group or a cyano group; when there are plural As, they are each optionally different; m represents an integer of 0 to 4; X represents a metal atom; and n represents an integer of 1 to 4 which corresponds to the valency of the metal atom represented by X),
and may also comprise a hydrate.

Examples of the $C_1$-$C_8$ alkyl group which is optionally substituted, which is represented by A in the above-described Formula (2), include methyl, ethyl, propyl, isopropyl, butyl, sec-butyl, tert-butyl, isobutyl, amyl, isoamyl, tert-amyl, hexyl, cyclohexyl, heptyl, isoheptyl, tert-heptyl, n-octyl, isooctyl, tert-octyl, 2-ethylhexyl and trifluoromethyl, and the hydrogen atoms in these groups are optionally substituted by a halogen atom.

Examples of the $C_1$-$C_8$ alkoxy group which is optionally substituted, which is represented by A in the above-described Formula (2) include methoxy, ethoxy, propoxy, butoxy, sec-butoxy, tert-butoxy and trifluoromethyloxy, and the hydrogen atoms in these groups are optionally substituted by a halogen atom.

In addition to the above-described alkyl groups and alkoxy groups, examples of the A in the above-described

Formula (2) include alkylthio groups such as methylthio, ethylthio, propylthio, isopropylthio and tert-butylthio; nitro groups; and cyano groups.

Examples of the metal of the above-described metal salt of sulfonamide compound or sulfonimide compound include metals selected from lithium, potassium, sodium, magnesium, calcium, strontium, barium, titanium, manganese, iron, zinc, silicon, zirconium, yttrium and barium. Thereamong, potassium, lithium, sodium and calcium are preferred since these metals have excellent effect to promote crystallization of the polyester resin, and sodium is particularly preferred.

Preferred examples of the compound represented by the above-described Formula (2) include the following Compounds No. 6 to No. 10; however, the present invention is not restricted thereto.

Compound No. 6: sodium 1,2-benzisothiazol-3(2H)-one-1,1-dioxide
CompoundNo. 7: lithium 1,2-benzisothiazol-3(2H)-one-1,1-dioxide
Compound No. 8: potassium 1,2-benzisothiazol-3(2H)-one-1,1-dioxide
Compound No. 9: calcium bis(1,2-benzisothiazol-3(2H)-one-1,1-dioxide)
Compound No. 10: barium bis(1,2-benzisothiazol-3(2H)-one-1,1-dioxide)

In the method of producing a plastic bottle according to the present invention, the above-described nucleating agent for polyester resins is blended in an amount of 0.005 to 0.025 parts by mass, more preferably 0.015 to 0.020 parts by mass, with respect to 100 parts by mass of the polyester resin. When the amount is less than 0.005 parts by mass, the effect of the addition is insufficient, while when the amount is greater than 0.025 parts by mass, the plastic bottle may become excessively crystallized and turbid, impairing the outer appearance of the plastic bottle.

In the present invention, the above-described nucleating agent for polyester resins is added by first preparing a masterbatch of the nucleating agent and a polyester resin and then mixing the thus prepared masterbatch with the polyester resin. The masterbatch comprises the above-described nucleating agent for polyester resins in an amount of 0.1 to 90 parts by mass, preferably 0.1 to 50 parts by mass, more preferably 0.1 to 5 parts by mass. When the amount is less than 0.1 parts by mass, the effect attained by the addition as a masterbatch is not sufficient, while when the amount is greater than 90 parts by mass, the shape of the masterbatch is unstable, so that the masterbatch is easily reduced to powder by an impact during transportation or the like. The method of preparing the masterbatch is not particularly restricted, and a conventionally known method may be employed. For example, after dry-blending the components, the resultant may also be mixed by a Henschel mixer, mill roll, Banbury mixer, super mixer or the like and kneaded using a uniaxial or biaxial extruder or the like. This mix-kneading process is usually carried out at a temperature of not lower than the softening point of the resin to about 300°C.

Further, as required, other commonly-used additive(s) may also be added to the polyester resin composition in such an amount that does not practically alter the characteristics of the main component, polyester resin.

Examples of the above-described other additives include antioxidants (oxidation inhibitors) such as phenolic, phosphorus-based and sulfur-based antioxidants; light stabilizers such as HALSs and UV absorbers; lubricants such as hydrocarbon-based lubricants, fatty acid-based lubricants, aliphatic alcohol-based lubricants, aliphatic ester-based lubricants, aliphatic amide compounds, aliphatic metal carboxylates and other metallic soap-based lubricants; heavy metal inactivators; anti-clouding agents; antistatic agents such as cationic surfactants, anionic surfactants, nonionic surfactants and ampholytic surfactants; halogen compounds; phosphate compounds, amide phosphate compounds; melamine compounds; fluorocarbon resins or metal oxides; flame retardants such as (poly)melamine phosphate and (poly)piperazine phosphate; fillers such as glass fibers and calcium carbonate; anti-blocking agents; anti-clouding agents; slip agents; pigments; silicate-based inorganic additives such as hydrotalcite, fumed silica, fine-particle silica, silica rock, diatomites, clay, kaolin, diatomaceous earth, silica gel, calcium silicate, sericite, kaolinite, flint, feldspar powder, vermiculite, attapulgite, talc, mica, minnesotite, pyrophyllite and silica; crystalline nucleating agents such as dibenzylidene sorbitol, bis(p-methylbenzylidene)sorbitol, bis(p-ethylbenzylidene)sorbitol and disodium bicyclo[2.2.1]heptane-2,3-dicarboxylate.

Examples of the above-described phenolic antioxidants (oxidation inhibitors) include the same ones as exemplified in the above.

Examples of the above-described phosphorus-based antioxidant include triphenyl phosphite, tris(2,4-di-tert-butylphenyl)phosphite, tris(2,5-di-tert-butylphenyl)phosphite, tris(nonylphenyl)phosphite, tris(dinonylphenyl)phosphite, tris(mono-, di-mixed nonylphenyl)phosphite, diphenyl acid phosphite, 2,2'-methylenebis(4,6-di-tert-butylphenyl)octyl phosphite, diphenyldecyl phosphite, diphenyloctyl phosphite, di(nonylphenyl)pentaerythritol diphosphite, phenyldiisodecyl phosphite, tributyl phosphite, tris(2-ethylhexyl)phosphite, tridecyl phosphite, trilauryl phosphite, dibutyl acid phosphite, dilauryl acid phosphite, trilauryl trithiophosphite, bis(neopentyl glycol)·1,4-cyclohexane dimethyl diphosphite, bis(2,4-di-tert-butylphenyl)pentaerythritol diphosphite, bis(2,5-di-tert-butylphenyl)pentaerythritol diphosphite, bis(2,6-di-tert-butyl-4-methylphenyl)pentaerythritol diphosphite, bis(2,4-dicumylphenyl)pentaerythritol diphosphite, distearyl pentaerythritol diphosphite, tetra(C12-15 mixed alkyl)-4,4'-isopropylidene diphenylphosphite, bis[2,2'-methylenebis(4,6-diamylphenyl)]·isopropylidene diphenylphosphite, tetratridecyl·4,4'-butylidenebis(2-tert-butyl-5-methylphenol)diphosphite, hexa(tridecyl)·1,1,3-tris(2-methyl-5-tert-butyl-4-hydroxyphenyl)butane·triphosphite, tetrakis(2,4-di-tert-butylphenyl)biphenylene diphosphonite, tris(2-[(2,4,7,9-tetrakis-tert-butyldibenzo[d,f][1,3,2]dioxaphosphepine-6-yl)oxy]ethyl)amine, 9,10-dihydro-9-oxa-10-phosphaphenanthrene-10-oxide and 2-butyl-2-ethylpropanediol·2,4,6-tri-tertbutylphenol monophosphite.

Examples of the above-described sulfur-based antioxidant include dialkyl thiodipropionates such as dilauryl, dimyristyl, myristylstearyl and distearyl of thiodipropionic acid; and β-alkylmercapto propionic acid esters of polyols such as pentaerythritol tetra(β-dodecylmercaptopropionate).

Examples of the above-described HALS include 1,2,2,6,6-pentamethyl-4-piperidyl stearate, bis(1,2,2,6,6-pentamethyl-4-piperidyl)sebacate, bis(1-octoxy-2,2,6,6-tetramethyl-4-piperidyl)sebacate, 1,2,2,6,6-pentamethyl-4-piperidyl methacrylate, 2,2,6,6-tetramethyl-piperidyl methacrylate, tetrakis(1,2,2,6,6-pentamethyl-4-piperidyl)-1,2,3,4-butane tetracarboxylate, bis(1,2,2,6,6-pentamethyl-4-piperidyl)-bis(tridecyl)-1,2,3,4-butane tetracarboxylate, bis(1,2,2,6,6-pentamethyl-4-piperidyl)-2-butyl-2-(3,5-di-tert-butyl-4-hydroxybenzyl)malonate, 3,9-bis[1,1-dimethyl-2-{tris(1,2,2,6,6-pentamethyl-4-piperidyloxycarbonyloxy)butylcarbonyloxy}ethyl]-2,4,8,10-tetraoxaspiro[5.5]undecane, 1,5,8,12-tetrakis[2,4-bis(N-butyl-N-(1,2,2,6,6-pentamethyl-4-piperidyl)amino)-s-triazine-6-yl]-1,5,8,12-tetraazadodecane, 1,6,11-tris[2,4-bis(N-butyl-N-(1,2,2,6,6-pentamethyl-4-piperidyl)amino)-s-triazine-6-ylamino]undecane, 1-(2-hydroxyethyl)-1,2,2,6,6-pentamethyl-4-piperidinol/diethyl succinate polycondensate, 1,6-bis(1,2,2,6,6-pentamethyl-4-piperidylamino)hexane/dibromoethane polycondensate, bis{4-(1-octyloxy-2,2,6,6-tetramethyl)piperidyl}decanedionate, bis {4-(2,2,6,6-tetramethyl-1 - undecyloxy)piperidyl)carbonate and TINUVIN NOR 371 (trade name) manufactured by Ciba Specialty Chemicals Corporation.

Examples of the above-described UV absorber include the same ones as exemplified in the above.

Examples of the aliphatic amide-based compounds used as the above-described lubricant include mono-fatty acid amides such as lauric acid amide, stearic acid amide, oleic acid amide, erucic acid amide, ricinoleic acid amide and 12-hydroxy stearic acid amide; N,N'-bis-fatty acid amides such as N,N'-ethylenebis lauric acid amide, N,N'-methylenebis stearic acid amide, N,N'-ethylenebis stearic acid amide, N,N'-ethylenebis oleic acid amide, N,N'-ethylenebis behenic acid amide, N,N'-ethylenebis-12-hydroxy stearic acid amide, N,N'-butylenebis stearic acid amide, N,N'-hexamethylenebis stearic acid amide, N,N'-hexamethylenebis oleic acid amide and N,N'-xylylenebis stearic acid amide; alkylol amides such as stearic acid monomethylol amide, coconut oil fatty acid monoethanol amide and stearic acid diethanol amide; N-substituted fatty acid amides such as N-oleyl stearic acid amide, N-oleyl oleic acid amide, N-stearyl stearic acid amide, N-stearyl oleic acid amide, N-oleyl palmitic acid amide and N-stearyl erucic acid amide; and N,N'-substituted dicarboxylic acid amides such as N,N'- dioleyl adipic acid amide, N,N'-distearyl adipic acid amide, N,N'-dioleyl sebacic acid amide, N,N'-distearyl sebacic acid amide, N,N'-distearyl terephthalic acid amide and N,N'-distearyl isophthalic acid amide. These may be used individually or two or more thereof may be used as a mixture.

Examples of the above-described flame retardant include phosphoric acid esters such as triphenyl phosphate, phenol-resorcinol-phosphorus oxychloride condensates, phenol·bisphenol A phosphorus oxychloride condensates and 2,6-xylenol-resorcinol-phoshprus oxychloride condensates; phosphoric acid amides such as aniline-phosphorus oxychloride condensates and phenol·xylylenediamine·phosphorus oxychloride condensates; phosphazene; halogen-based flame retardants such as decabromodiphenyl ether and tetrabromo bisphenol A; phosphates of nitrogen-containing organic compounds such as melamine phosphate, piperazine phosphate, melamine pyrophosphate, piperazine pyrophosphate, melamine polyphosphate and piperazine polyphosphate; red phosphorus and surface-treated and microencapsulated red phosphorus; flame-retardant aids such as antimony oxide and zinc borate; and anti-drip agents such as polytetrafluoroethylene and silicone resins. The flame retardant is added in an amount of preferably 1 to 30 parts by mass, more preferably 5 to 20 parts by mass, with respect to 100 parts by mass of the above-described polyester.

As the solvent into which the above-described nucleating agent for polyester resins is dissolved, one which can dissolve the above-described glycol component and does not adversely affect the polycondensation reaction of polyethylene terephthalate is preferred, and ethylene glycol is particularly preferred.

In the present invention, the plastic bottle can be molded by a variety of blow molding methods. The blow molding method is not particularly restricted, and examples thereof include a direct blow method in which a preform is extrusion molded and then subjected to blow molding; and an injection blow molding method in which a preform (parison) is injection molded and then subjected to blow molding.

As the latter injection blow molding method, either of a hot parison method (one-stage method) where a preform is molded and then continuously subjected to blow molding and a cold parison method (two-stage method) where a preform is once cooled and taken out before being subjected to re-heating and blow molding can be adopted.

The above-described preform may be constituted not only by a single polyester resin layer, but also by two or more of polyester resin layers. In addition, an intermediate layer may be inserted between an inner layer and outer layer that are composed of two or more polyester resin layers, and the intermediate layer may be used as a barrier layer or oxygen-absorbing layer.

The above-described barrier layer refers to one which inhibits permeation of oxygen from outside into the plastic

bottle and prevents degeneration of the content, and such barrier layer is particularly suitably used in a plastic bottle for carbonated beverage.

The above-described oxygen-absorbing layer is one which absorbs oxygen and prevents permeation of oxygen inside the plastic bottle, and as the oxygen-absorbing layer, an oxidizable organic substance or transition metal catalyst or a resin having high gas-barrier properties which is not substantially oxidized is employed.

In the production method according to the present invention, the above-described preform can be produced using a known injection molding machine or extrusion molding machine. A masterbatch is prepared in advance by blending 0.1 to 90 parts by mass of the above-described nucleating agent for polyester resins with 100 parts by mass of a polyester resin and the thus prepared masterbatch is mixed with the polyester resin such that the amount of the above-described nucleating agent component becomes 0.005 to 0.025 parts by mass with respect to 100 parts by mass of the polyester resin to prepare a polyester resin composition. Using this polyester resin composition, the preform is produced.

In cases where a multi-layer preform comprising an oxygen-absorbing layer as an intermediate layer is produced as the preform, such multi-layer preform can be produced by, with a known co-injection molding machine or the like, preparing an inner and outer layers made of a polyester resin and inserting therebetween one or two or more oxygen-absorbing layers.

In the production method according to the present invention, in cases where the above-described preform is stretch-blow molded, the preform is stretched by heating it at a temperature of not lower than its glass transition temperature. The preform heating temperature may be 85°C to 135°C, more preferably 90°C to 130°C. When the heating temperature is lower than 85°C, the preform may not be sufficiently softened, so that stretch-blow molding thereof cannot be performed, while when the heating temperature is higher than 135°C or when the heating time is too long, the preform may be excessively crystallized, so that the preform may not be uniformly stretched or the transparency of the resulting plastic bottle may be impaired.

The above-described stretching is carried out by stretch-blow molding of the preform heated at a prescribed temperature. The die temperature is 85 to 160°C, more preferably 90 to 145°C. When it is lower than 85°C, thermal contraction of the molded article may be prominent, leading to inconsistency in the molding dimension, while when the die temperature is higher than 160°C, thermal decomposition of the resin may be facilitated and contaminants may become more likely to adhere to the die.

In cases where it is desired to improve the heat resistance of the above-described plastic bottle, a method of performing a heat treatment (heat-setting) of the plastic bottle may be employed. In the above-described heat treatment, the produced plastic bottle is heated to a temperature of 180 to 245°C, more preferably 200 to 235°C, and re-molded at a die temperature of 100 to 230°C, more preferably 110 to 200°C. At a die temperature of lower than 100°C, sufficient heat resistance may not be attained, while at a die temperature of not lower than 230°C, the shape of the molded article may not be maintained.

Further, although the draw ratio in the blow molding is not particularly restricted, it is preferred that the draw ratio (longitudinal draw ratio × lateral draw ratio) be 3 to 14 times, preferably 4 to 12 times. When the draw ratio is 14 times or greater, whitening of the plastic bottle may occur due to excessive stretching, while when the draw ratio is smaller than 3 times, it is required to make the preform thin; however, it is difficult to mold a thin film to a uniform thickness.

The plastic bottle produced by the production method according to the present invention is used in aseptic filling system. In addition, deformation of the mouth section of the plastic bottle due to filling at a high temperature can be prevented by crystallizing the bottle-neck portion of the plastic bottle. In cases where the crystallization of the mouth section is not sufficient, there may arise problems of, for example, deformation when tightening the cap on the plastic bottle, and leakage of the content and loosening of the cap after cooling the plastic bottle filled with the content.

As the method of crystallizing the mouth section, before or after performing blow molding, the mouth section of the preform or plastic bottle can be crystallized by heating. The temperature of the heat crystallization is preferably 160 to 200°C, more preferably 160 to 180°C.

Further, in cases where the plastic bottle is produced for a heat-resistant application, it is required that the density of the plastic bottle be set to an appropriate value. When the density is too high, the degree of crystallinity of the plastic bottle may become excessively high, causing a problem in the blow molding process, while when the density is too low, the plastic bottle may be thermally deformed and leakage of the content may occur during heating of the plastic bottle. The density of the plastic bottle is appropriately selected depending on the polyester resin.

Specific examples of the use of the plastic bottle produced by the production method according to the present invention include, in addition to ordinary bottles, bottles for carbonated beverages, bottles for high-temperature filling, hot-compatible bottles and heat and pressure-resistant bottles, and as for the application of the plastic bottle, beverage containers of dairy products, teas, soft drinks, carbonated drinks, beers, wines, distilled spirits, Japanese rice wines and the like; storage containers of flavoring agents such as soy sauce, edible oils, salad dressings and spices; containers of detergents such as shampoos and rinses; and containers of cosmetics can be exemplified.

The plastic bottle produced by the production method according to the present invention can be applied not

only to a small bottle of a few ml or so in volume, but also to a large bottle having a volume of exceeding 5 L. The plastic thickness is not restricted as long as it can protect the content, and usually, it is preferred that the thinnest part have a thickness of 0.1 mm to 1 mm.

Further, the plastic bottle can also be used as a coated bottle container in which the outer surface of the plastic bottle is coated with a film of polyethylene, polypropylene or the like or a laminated film obtained by laminating ceramic, silica and the like, as well as a bottle container in which a metal oxide, amorphous carbon or the like is vapor-deposited to the bottle inner surface.

In cases where an aseptic filling method is adopted to the plastic bottle produced by the production method according to the present invention, a known system can be employed. Specific examples thereof include a system constituted by a combination of a container-sterilizing section and an aseptic filling section.

In the container-sterilizing section, after washing the inside of the plastic bottle with, for example, warm water or a chlorine-based agent containing hydrogen peroxide, peracetic acid, hypochlorous acid, ozone or the like, the plastic bottle is sterilized by injecting a sterile solvent or impregnating the plastic bottle into a chemical agent. Then, the plastic bottle is inverted to discharge the sterile solvent or chemical agent and subjected to a treatment for removing residual matters by blowing air or the like.

In the aseptic filling section, the thus sterilized container is filled with a sterilized content and then subjected to a capping treatment. Examples of the method of sterilizing the content include a method of filtering out bacteria by an ultrafiltration and a method of performing flash pasteurization by high-temperature short-time sterilization.

The upper limit of the temperature at which the content is filled is 40°C, more preferably 30 to 40°C. However, in cases where a cooling step is added after the filling step, the upper limit of temperature may be 50 to 60°C.

## EXAMPLES

### [Examples 1-1 to 1-6 and Comparative Examples 1-1 to 1-3]

The present invention will now be described in detail by way of specific production examples, examples and comparative examples; however, the present invention is not restricted by these examples and the like. Further, the average particle size and water content of sodium sulfonate metal salt were determined by the following methods.

### (Average Particle Size)

The average particle size was determined using a laser diffraction-scattering-type particle size analyzer (Microtrac MT3000II; manufactured by Nikkiso Co., Ltd.) in accordance with a laser diffraction-scattering method (Microtrac method). The average particle size was defined as the value obtained when, in the histogram of particle size distribution obtained by measuring the particle size distribution (volume distribution) under a dry condition, the particle sizes were cumulatively added from the smallest ones and the integrated value became 50%.

### (Water Content)

The percent water content was determined using Thermo Plus 2/(TG-DTA Series) manufactured by Rigaku Corporation as the amount of decrease in the weight of the measurement sample (5 mg) when the temperature thereof was raised from room temperature to 150°C under a nitrogen atmosphere (flow rate: 200 ml/min) at a heating rate of 50°C /min.

### [Production Example 1]

To 100 parts by mass of a polyethylene terephthalate resin (TR-8550 manufactured by Teijin Chemicals Ltd.), 0.3 parts by mass of a sulfonamide compound metal salt (1,2-benzisothiazo1-3(2H)-one-1,1-dioxide sodium salt; average particle size: 4.4μm; water content: 0.1%) and the respective antioxidant shown in Table 1 were added and mixed well. The resulting mixture was granulated using a biaxial extruder (machine: TEX28V manufactured by The Japan Steel Works, Ltd.; cylinder temperature: 270°C; screw speed: 200 rpm) to obtain a pellet. The yellowness of the thus obtained pellet was measured under the following conditions.

### (Yellowness)

For each of the pellets obtained in the above-described Production Example 1, a 60 mm × 60 mm × 1 mm sheet was molded using an injection molding machine EC100 manufactured by Toshiba Corporation (molding conditions: injection temperature of 270°C, injection time of 20 seconds, die temperature of 25°C and die cooling time of 30 seconds)

and the yellowness of the thus molded sheet was measured using a spectrocolorimeter (MSC-IS-2DH manufactured by Suga Test Instruments Co., Ltd.). The results thereof are shown in Table 1.

[Reference Example 1]

A pellet was obtained in the same manner as in the above-described Production Example 1, except that the 1,2-benzisothiazo1-3(2H)-one-1,1-dioxide sodium salt and antioxidant were not blended. The yellowness of the thus obtained pellet was determined. The result thereof is shown in Table 1.

[Table 1]

| | Sulfonamide compound metal salt | | Antioxidant | | Evaluation |
|---|---|---|---|---|---|
| | Compound | Added amount [phr] | Compound | Added amount [phr] | Yellowness (YI) |
| Example 1-1 | N-1 | 0.3 | P-1 | 0.1 | 4.8 |
| Example 1-2 | N-1 | 0.3 | P-2 | 0.1 | 3.3 |
| Example 1-3 | N-1 | 0.3 | P-3 | 0.1 | 3.3 |
| Example 1-4 | N-1 | 0.3 | P-3 | 0.03 | 3.5 |
| Example 1-5 | N-1 | 0.3 | P-3 | 0.3 | 3.3 |
| Example 1-6 | N-1 | 0.3 | P-4 | 0.1 | 5.0 |
| Comparative Example 1-1 | N-1 | 0.3 | - | - | 6.0 |
| Comparative Example 1-2 | N-1 | 0.3 | A-1 | 0.1 | 6.2 |
| Comparative Example 1-3 | N-1 | 0.3 | A-2 | 0.1 | 5.2 |
| Reference Example 1 | - | - | - | - | 3.0 |

N-1: 1,2-benzisothiazol-3(2H)-one-1,1-dioxide sodium salt
P-1: 2,2-methylenebis(4,6-di-t-butylphenyl)octyl phosphite
P-2: bis(2,4-di-t-butylphenyl)pentaerythritol diphosphite
P-3: bis(2,6-di-t-butyl-4-ethylphenyl)pentaerythritol diphosphite
P-4: tris(2,4-di-t-butylphenyl)phosphite
A-1: tetrakis[methylene-3-(3,5-di-t-butyl-4'-hydroxyphenyl)propionate]methane
A-2: 2,4,8,10-tetra-t-butyl-6-[3-(3-methyl-4-hydroxy-5-t-butylphenyl)propyl]dibenzo[d,f][1,3,2]dioxaphosphepine

According to Reference Example 1 shown in Table 1, when no sulfonamide compound metal salt was added, the molded article of the polyethylene terephthalate resin was not colored so much. However, in Comparative Example 1-1, coloring of the polyethylene terephthalate resin occurred when the sulfonamide compound metal salt was blended. According to Comparative Examples 1-2 and 1-3, when a non-phosphorus-based antioxidant was added, the effect of inhibiting coloring of the polyethylene terephthalate resin was poor.

In contrast, according to Examples 1-1 to 1-6, coloring of the polyethylene terephthalate resin could be inhibited by using the sulfonamide compound metal salt and phosphorus-based antioxidant in combination. Especially, in Examples 1-2 and 1-3, the use of the phosphorus-based antioxidant represented by the above-described Formula (1) particularly inhibited the coloring.

[Examples 2-1 to 2-3 and Comparative Examples 2-1 to 2-5]

[Production Example 2]

To 100 parts by mass of a polyethylene terephthalate resin (TR-8550 manufactured by Teijin Chemicals Ltd.), 1,2-benzisothiazol-3(2H)-one-1,1-dioxide sodium salt adjusted to have the water content shown in Table 2 was added. Here, the water contents shown in Table 2 are based on the mass ratio with respect to the sulfonamide compound metal

salt. Further, 0.1 parts by mass of a phosphorus-based antioxidant (bis(2,6-di-t-butyl-4-ethylphenyl)pentaerythritol phosphite) was added and mixed well, and the resultant was granulated using a conical biaxial extruder (machine: Labo Plastomill manufactured by Toyo Seiki Seisaku-sho, Ltd.; cylinder temperature: T1 (250°C), T2 to T4 (290°C); screw speed: 50 rpm) to prepare a masterbatch pellet.

It is noted here that, before the mixing, the polyethylene terephthalate resin was dried under reduced pressure at 160°C for 5 hours. Also, the sulfonamide compound metal salt, 1,2-benzisothiazo1-3(2H)-one-1,1-dioxide sodium salt, was dried under reduced pressure at 130°C for 4 hours to have a water content of 0.1 wt% with respect to the sulfonamide compound metal salt.

(Pellet Shape Outer Appearance)

For the pellets obtained in the above-described Production Example 2, the outer appearance of the pellet shape was verified. The symbol ○ was assigned when the pellet had a uniform shape. When the shape was irregular or when the pellet was partially or entirely crystallized or turbid, the symbol × was assigned.

The results of the evaluation are shown in Table 2.

[Reference Example 2]

A pellet was obtained in the same manner as in the above-described Production Example 2, except that the 1,2-benzisothiazo1-3(2H)-one-1,1-dioxide sodium salt and antioxidant were not blended. For the thus obtained pellet, the pellet shape was verified. The result thereof is shown in Table 2.

[Table 2]

| | Sulfonamide compound metal salt | | | Phosphorus-based antioxidant | | Pellet shape and outer appearance | Note |
|---|---|---|---|---|---|---|---|
| | Compound | Water content [wt%] | Added amount [phr] | Compound | Added amount [phr] | | |
| Example 2-1 | N-1 | 18.9 | 0.1 | P-3 | 0.05 | ○ | - |
| Example 2-2 | N-1 | 0.28 | 10 | P-3 | 0.3 | ○ | - |
| Example 2-3 | N-1 | 0.09 | 30 | P-3 | 1.0 | ○ | - |
| Comparative Example 2-1 | N-1 | 0.21 | 20 | P-3 | 1.0 | × | The viscosity was reduced and the strands formed at the time of granulation could not be removed. |
| Comparative Example 2-2 | N-1 | 0.09 | 10 | P-3 | 40 | × | The pellet shape was not consistent. |
| Comparative Example 2-3 | N-1 | 0.09 | 50 | P-3 | 1.0 | × | Pellet was crystallized and cracked. |
| Comparative Example 2-4 | N-1 | 25.1 | 0.1 | P-3 | 1.0 | × | The resin was colored, the viscosity was reduced, and the strands could not be removed. |
| Comparative Example 2-5 | N-1 | 0.10 | 0.05 | P-3 | 1.0 | ○ | The effect of addition as a masterbatch could not be attained. |

According to Comparative Examples 2-1 and 2-3 shown in Table 2, when the water content of the sulfonamide compound metal salt exceeded 3% based on the mass ratio with respect to the polyester resin composition (Comparative Example 2-1: 9.3%, Comparative Example 2-3: 6.5%), there were problems of, for example, a reduction in the viscosity of the polyester resin, coloring of the resin and a reduction in the shape stability of the granulated pellet.
Further, according to Comparative Example 2-4, even in the case where the water content of the sulfonamide compound metal salt was not higher than 3% based on the mass ratio with respect to the polyester resin composition, when the water content exceeded 20% based on the mass ratio with respect to the sulfonamide compound metal salt, there were problems of, for example, coloring of the polyester resin and a reduction in its viscosity. As clearly seen from Comparative Example 2-2, when the phosphorus-based antioxidant was added in an amount of greater than 30 parts by mass with respect to 100 parts by mass of the polyester resin, the pellet shape was not stable.
Furthermore, according to Comparative Example 2-5, although there was no problem in preparing the pellet since the water content of the polyester resin composition was sufficiently low, the added amount of the sulfonamide compound metal salt, which was 0.05 phr, was low in order to use the pellet as a masterbatch, so that the effect of addition as a masterbatch was hardly obtained.
In contrast to this, according to Examples 2-1 to 2-3, the polyester resin composition according to the present invention, in which the water content of the sulfonamide compound metal salt (B) is in the range of 0.1% to 20% based on the mass ratio with respect to the sulfonamide compound metal salt and not higher than 3% based on the mass ratio with respect to the polyester resin composition, has good processability, so that it could be granulated without any problems.

[Examples 3-1 to 3-3 and Comparative Example 3-1]

The thermal contraction rate and creep characteristics of polyester fibers were measured under the following conditions.

(Thermal Contraction Rate)

The thermal contraction rate was evaluated in accordance with the Deutsche Industrie Normen DIN 53866 T3.
A test piece was stretched at a tension of 5 mN/tex and while maintaining the condition, the test piece was left to stand in a thermostatic chamber at 180°C for 15 minutes. Then, the test piece was returned to room temperature while maintaining the tension and the fiber length was measured to determine, as the thermal contraction rate, the contraction rate with respect to the length of an untreated fiber stretched at a tension of 5 mN/tex.

(Creep Characteristics)

In accordance with the Deutsche Industrie Normen DIN 53835 T3, the residual elongation was measured as a creep characteristic by the following method.
A test piece was mounted to a clamp at a tension of 2 mN/tex in advance and stretched at a rate of 50 mm/min to an elongation of 7%. After maintaining the condition for one hour, the tension was released and the clamp was returned to the initial position. The test piece was stretched once again at a rate of 50 mm/min until there was no slack in the test piece and the elongation of the test piece measured at this point was defined as the residual elongation.

(Crystallinity Evaluation Method)

Fibers were bundled and loaded onto a measurement sample holder, and the crystallinity was measured using an X-ray diffractometer in continuous step scanning mode under the following conditions: Cu-Kα radiation: 40 kV/40 mA; step width: 0.1°; scanning speed: 5 seconds/step; scanning range: 5 to 60°, transmission.
The crystallinity was evaluated in terms of the degree of crystallinity (Xc). The relationship among the degree of crystallinity (Xc), the X-ray intensity of crystalline PET (Icry) and the X-ray intensity of amorphous PET resin (Iam) is represented by the following equation: $Xc = Icry/(Icry + Iam)$.
The area of the X-ray spectrum of the amorphous PET resin was calculated in advance and this was subtracted from the area of the X-ray spectrum of the measurement sample. The ratio of the thus obtained value and the total area of the X-ray spectrum of the measurement sample was defined as the degree of crystallinity (Xc) to evaluate the crystallinity of the measurement sample.

[Examples 3-1 to 3-3]

To 100 parts by mass of a polyethylene terephthalate resin (TR-8550 manufactured by Teijin Chemicals Ltd.)

which had been dried at 180°C in advance, 0.3 parts by mass of the respective nucleating agent for polyester resins shown in Table 5 below was added and mixed well. The resultant was melt-kneaded using a biaxial extruder (PTW16 manufactured by HAAKE; cylinder temperature: 285°C) and stretched under the conditions shown in the following Table 3 using a winder (manufactured by SAHM, Germany) to prepare a fiber which was subsequently cooled to room temperature.

The thus cooled fiber was stretched under the conditions shown in Table 4 below using the winder.

[Table 3]

| | LW | Duo1 | Duo2 | Duo3 |
|---|---|---|---|---|
| Temperature [°C] | 20 | 20 | 85 | 140 |
| Tensile rate [m/min] | 1085 | 1090 | 1095 | 1100 |

[Table 4]

| | LW | Duo1 | Duo2 | Duo3 |
|---|---|---|---|---|
| Temperature [°C] | 20 | 20 | 80 | 145 |
| Tensile rate [m/min] | 200 | 210 | 240 | 940 |

[Comparative Example 3-1]

A fiber was obtained in the same manner as in the above-described Example 3-1, except that the nucleating agent for polyester resins which is composed of a sulfonamide compound metal salt or sulfonimide compound metal salt was not blended.

For the fibers obtained in Examples 3-1 to 3-3 and Comparative Example 3-1, the thermal contraction rate, creep characteristics and degree of crystallinity were determined. The results thereof are shown in Table 5.

[Table 5]

| | Nucleating agent for polyester resin | Thermal contraction rate [%] | Creep characteristics | Degree of crystallinity |
|---|---|---|---|---|
| | | | Residual elongation [%] | |
| Example 3-1 | toluene-4-sulfonamide sodium salt | 10.8 | 0.0 | 0.51 |
| Example 3-2 | N-phenyl-4-methyl-benzenesulfonamide sodium salt | 11.7 | 0.0 | 0.50 |
| Example 3-3 | 1,2-benzisothiazol-3(2H)-one-1,1-dioxide sodium salt | 11.0 | 0.0 | 0.51 |
| Comparative Example 3-1 | Control[1)] | 15.4 | 2.5 | 0.44 |
| 1) Control: no nucleating agent was blended | | | | |

From Table 5, it was confirmed that, by blending a nucleating agent for polyester resins which is composed of a sulfonamide compound metal salt or sulfonimide compound metal salt, the polyester fiber according to the present invention can have good crystallinity, excellent creep characteristics and a small thermal contraction rate.

[Examples 4-1 to 4-7 and Comparative Examples 4-1 to 4-4]

In Examples 4-1 to 4-7 and Comparative Examples 4-1 to 4-4, the crystallinity and transparency of polyester resin molded articles were evaluated by the following methods.

(Crystallinity Evaluation Method)

The crystallinity was evaluated using a Raman microscope (NRS-3100 manufactured by JASCO Corporation; excitation laser: 532 nm) in terms of the half-value width of the Raman spectrum peak at about 1730 $cm^{-1}$ where the carbonyl group of PET resin is observed. The smaller the half-value width of the peak representing the carbonyl group, the more advanced the crystallization of PET.

(Transparency Evaluation Method)

As for the transparency, the haze of the respective PET resin molded articles was measured using Haze Guard II (manufactured by Toyo Seiki Seisaku-sho Ltd.). The symbol ○ was assigned when the haze was not greater than 4, and the symbol × was assigned when the haze was greater than 4.

[Examples 4-1 to 4-7]

To 100 parts by mass of a polyethylene terephthalate resin (TR-8550 manufactured by Teijin Chemicals Ltd.), 0.02 parts by mass of the respective nucleating agent for polyester resins shown in Table 6 below was added and mixed well. The resulting mixture was granulated using a biaxial extruder (machine: TEX28V manufactured by The Japan Steel Works, Ltd.; cylinder temperature: 270°C; screw speed: 200 rpm) to obtain a pellet. The thus obtained pellet was molded into a 90 mm× 90 mm × 2 mm sheet using an injection molding machine (EC100 manufactured by Toshiba Corporation) (molding conditions: injection temperature of 280°C, injection time of 15 seconds, die temperature of 15°C and die cooling time of 20 seconds).

A biaxial stretching machine (EX-10B manufactured by Toyo Seiki Seisaku-sho, Ltd.) was confirmed to be in a stable condition at a preset temperature of 90°C and a stretching rate of 4,000 mm/min in both the longitudinal and lateral directions, and after setting the thus obtained sheet on the biaxial stretching machine and leaving it to stand for 3 minutes, the sheet was stretched by 2.5 times. The thus obtained stretched sheet was subjected to an annealing treatment under the conditions shown in Table 6 below and the transparency and crystallinity of the sheet were evaluated. The results thereof are shown in Table 6.

[Comparative Examples 4-1 to 4-4]

In Comparative Example 4-1, a sheet was prepared in the same manner as in the above-described Example 4-1 except that an annealing treatment was not performed, and the transparency and crystallinity of the sheet were evaluated. In Comparative Example 4-2, a sheet was prepared in the same manner as in the above-described Example 4-1 except that the nucleating agent for polyester resins was changed as shown in the following Table 6, and the transparency and crystallinity of the sheet were evaluated. In Comparative Example 4-3, a sheet was prepared in the same manner as in the above-described Example 4-3 except that the nucleating agent for polyester resins was changed as shown in the following Table 6, and the transparency and crystallinity of the sheet were evaluated. In Comparative Example 4-4, a sheet was prepared in the same manner as in the above-described Example 4-1 and the annealing time was changed to 130 seconds to evaluate the transparency and crystallinity of the sheet. The results of these evaluations are shown in the following Table 6.

[Table 6]

| | Nucleating agent for polyester resin Added amount [parts by mass] | Annealing treatment | | Transparency | Crystallinity (peak half-value width) [$cm^{-1}$] |
|---|---|---|---|---|---|
| | | Temperature [°C] | Time [sec] | | |
| Example 4-1 | 1,2-benzisothiazol-3(2H)-one-1,1-dioxide sodium salt; 0.02 parts by mass | 170 | 5 | ○ | 16.3 |
| Example 4-2 | 1,2-benzisothiazol-3(2H)-one-1,1-dioxide sodium salt; 0.02 parts by mass | 170 | 10 | ○ | 15.4 |
| Example 4-3 | 1,2-benzisothiazol-3(2H)-one-1,1-dioxide sodium salt; 0.02 parts by mass | 170 | 15 | ○ | 15.7 |

(continued)

| | Nucleating agent for polyester resin Added amount [parts by mass] | Annealing treatment | | Transparency | Crystallinity (peak half-value width) [cm-1] |
|---|---|---|---|---|---|
| | | Temperature [°C] | Time [sec] | | |
| Example 4-4 | N-phenyl-4-methylbenzene sulfonamide sodium salt; 0.02 parts by mass | 170 | 15 | ○ | 15.3 |
| Example 4-5 | toluene-4-sulfonamide sodium salt; 0.02 parts by mass | 170 | 15 | ○ | 15.4 |
| Example 4-6 | 1,2-benzisothiazol-3(2H)-one-1,1-dioxide sodium salt; 0.02 parts by mass | 180 | 5 | ○ | 15.3 |
| Example 4-7 | 1,2-benzisothiazol-3(2H)-one-1,1-dioxide sodium salt; 0.02 parts by mass | 180 | 30 | ○ | 14.9 |
| Comparative Example 4-1 | 1,2-benzisothiazol-3(2H)-one-1,1-dioxide sodium salt; 0.02 parts by mass | -2) | -2) | ○ | 18.6 |
| Comparative Example 4-2 | Control1) | 170 | 5 | ○ | 18.1 |
| Comparative Example 4-3 | Control1) | 170 | 15 | ○ | 17.3 |
| Comparative Example 4-4 | 1,2-benzisothiazol-3(2H)-one-1,1-dioxide sodium salt; 0.02 parts by mass | 170 | 130 | × | 13.4 |
| 1) Control: No nucleating agent for polyester resins was blended.<br>2) No annealing treatment was performed. | | | | | |

According to the above-described Comparative Example 4-1, even when the nucleating agent for polyester resins was blended, without an annealing treatment, the crystallinity of the stretched sheet was not satisfactory. In addition, from Comparative Example 4-4, it was confirmed that whitening of the stretched sheet occurred and the transparency was impaired when the annealing time was longer than 2 minutes. In contrast to these, the polyester resin molded article according to the present invention was confirmed to have excellent transparency and crystallinity.

[Examples 4-8 to 4-10 and Comparative Examples 4-5 to 4-10]

(Method of Evaluating Carbon Dioxide Gas Transmission rate and Carbon Dioxide Gas Permeability Coefficient)

As an evaluation method of the gas-barrier properties, in accordance with JIS K7126-1, the carbon dioxide gas transmission rate and carbon dioxide gas permeability coefficient of the respective test pieces were measured at 23°C and 1 atm using differential pressure-type gas and vapor permeability testing systems (differential pressure-type gas permeation apparatus: GTR-30XAD2 manufactured by GTR Tec Corporation; vapor permeability measuring apparatus: G2700T·F manufactured by Yanako Technical Science, Inc.). The thickness of the respective test pieces was measured using a micrometer.

[Examples 4-8 to 4-10]

To 100 parts by mass of a polyethylene terephthalate resin (TR-8550 manufactured by Teijin Chemicals Ltd.), 0.3 parts by mass of the respective nucleating agent for polyester resins shown in Table 7 below was added and mixed well. The resulting mixture was granulated using a biaxial extruder (machine: TEX28V manufactured by The Japan Steel Works, Ltd.; cylinder temperature: 270°C; screw speed: 200 rpm) to obtain a pellet. Then, the thus obtained pellet and the above-described polyethylene terephthalate resin (TR-8550 manufactured by Teijin Chemicals Ltd.) were mixed and

adjusted in such a manner that the amounts thereof were as shown in Table 7 below. The resultant was granulated using the biaxial extruder (machine: TEX28V manufactured by The Japan Steel Works, Ltd.; cylinder temperature: 270°C; screw speed: 200 rpm) to obtain a pellet. The thus obtained pellet was molded into a 100 mm× 100 mm × 2 mm sheet using an injection molding machine (EC100 manufactured by Toshiba Corporation) (molding conditions: injection temperature of 280°C, injection time of 15 seconds, die temperature of 15°C and die cooling time of 20 seconds).

A biaxial stretching machine (EX-10B manufactured by Toyo Seiki Seisaku-sho, Ltd.) was confirmed to be in a stable condition at a preset temperature of 100°C and a stretching rate of 2,500 mm/min, and after setting the thus obtained sheet on the biaxial stretching machine and leaving it to stand for 5 minutes, the sheet was stretched by 3 times simultaneously in the longitudinal and lateral directions. The thus obtained stretched sheet was subjected to an annealing treatment under the conditions shown in Table 7 below and the gas transmission rate and gas permeability coefficient of the sheet were evaluated. The results thereof are shown in Table 7.

[Comparative Examples 4-5 to 4-10]

In Comparative Example 4-5, a sheet was prepared in the same manner as in the above-described Example 4-8 except that the nucleating agent for polyester resins was not blended, and the thus prepared sheet was stretched by 3 times simultaneously in the longitudinal and lateral directions. For the thus obtained stretched sheet, the gas transmission rate and gas permeability coefficient were evaluated without performing an annealing treatment. In Comparative Example 4-6, a sheet was prepared in the same manner as in the above-described Example 4-8 except that the nucleating agent for polyester resins was not blended, and the thus prepared sheet was stretched by 3 times simultaneously in the longitudinal and lateral directions. After subjecting the thus obtained stretched sheet to an annealing treatment as shown in Table 7 below, the gas transmission rate and gas permeability coefficient of the sheet were evaluated. In Comparative Example 4-7, a pellet was obtained to prepare a sheet in the same manner as in the above-described Example 4-8 in such a manner that the concentration of the nucleating agent became as shown in Table 7 below, and the thus prepared sheet was stretched by 3 times simultaneously in the longitudinal and lateral directions. After subjecting the thus obtained stretched sheet to an annealing treatment as shown in Table 7 below, the gas transmission rate and gas permeability coefficient of the sheet were evaluated. In Comparative Example 4-8, a sheet was prepared in the same manner as in Example 4-9 and the thus prepared sheet was stretched by 3 times simultaneously in the longitudinal and lateral directions. For the thus obtained stretched sheet, the gas transmission rate and gas permeability coefficient were evaluated without performing an annealing treatment. In Comparative Example 4-9, a sheet was prepared in the same manner as in Example 4-9 and the thus prepared sheet was stretched by 3 times simultaneously in the longitudinal and lateral directions. After subjecting the thus obtained stretched sheet to an annealing treatment as shown in Table 7 below at 90°C for 120 seconds, the gas transmission rate and gas permeability coefficient of the sheet were evaluated. In Comparative Example 4-10, a pellet was obtained to prepare a sheet in the same manner as in Example 4-8 in such a manner that the concentration of the nucleating agent was as shown in Table 7 below; however, since the thus prepared sheet could not be stretched, the gas transmission rate and gas permeability coefficient were not evaluated. It is noted here that, in the above-described Comparative Examples 4-5 and 4-6, since no nucleating agent for polyester resin was blended, the polyethylene terephthalate resin (TR-8550 manufactured by Teijin Chemicals Ltd.) was not further mixed after granulation of the pellet.

The evaluation results of Comparative Examples 4-5 to 4-10 are shown in the following Table 7.

[Table 7]

| | Nucleating agent for polyester resin Added amount [parts by mass] | Sample thickness [μm] | Annealing treatment | | Carbon dioxide gas transmission rate [mol/m²·s·Pa] | Carbon dioxide gas permeability coefficient [mol·m/m²·s·Pa] |
|---|---|---|---|---|---|---|
| | | | Temperature [°C] | Time [sec] | | |
| Example 4-8 | 1,2-benzisothiazol-3(2H)-one-1,1 -dioxide sodium salt 0.01 part by mass | 219 | 140 | 5 | $2.32\times10^{-13}$ | $5.08\times10^{-17}$ |
| Example 4-9 | 1,2-benzisothiazol-3(2H)-one-1,1-dioxide sodium salt 0.02 parts by mass | 223 | 140 | 5 | $2.20\times10^{-13}$ | $4.91\times10^{-17}$ |
| Example 4-10 | 1,2-benzisothiazol-3(2H)-one-1,1-dioxide sodium salt 0.05 parts by mass | 222 | 140 | 5 | $2.15\times10^{-13}$ | $4.77\times10^{-17}$ |
| Comparative Example 4-5 | Control[3)] | 217 | _[4)] | _[4)] | $3.16\times10^{-13}$ | $6.86\times10^{-17}$ |
| Comparative Example 4-6 | Control[3)] | 223 | 140 | 5 | $2.51\times10^{-13}$ | $5.61\times10^{-17}$ |
| Comparative Example 4-7 | 1,2-benzisothiazol-3(2H)-one-1,1-dioxide sodium salt 0.0005 parts by mass | 222 | 140 | 5 | $2.49\times10^{-13}$ | $5.33\times10^{-17}$ |
| Comparative Example 4-8 | 1,2-benzisothiazol-3(2H)-one-1,1-dioxide sodium salt 0.02 parts by mass | 212 | _[4)] | _[4)] | $2.95\times10^{-13}$ | $6.26\times10^{-17}$ |
| Comparative Example 4-9 | 1,2-benzisothiazol-3(2H)-one-1,1-dioxide sodium salt 0.02 parts by mass | 218 | 90 | 120 | $2.90\times10^{-13}$ | $6.32\times10^{-17}$ |
| Comparative Example 4-10 | 1,2-benzisothiazol-3(2H)-one-1,1-dioxide sodium salt 1.5 parts by mass | _[5)] | _[4)] | _[4)] | _[5)] | _[5)] |

3) Control: No nucleating agent for polyester resins was blended.
4) No annealing treatment was performed.
5) Not evaluated because the sheet could not be stretched.

According to above-described Comparative Example 4-6, when the annealing treatment was performed without blending the nucleating agent, the gas-barrier properties of the stretched sheet were not satisfactory. In addition, according to the above-described Comparative Example 4-7, when the amount of the nucleating agent was less than 0.001 parts by mass, the effect of the nucleating agent was hardly obtained. Further, in Comparative Example 4-8, even when the nucleating agent was blended, without an annealing treatment, the gas-barrier properties were not satisfactory. Furthermore, according to the above-described Comparative Example 4-9, in the case where the sheet was subjected to an annealing treatment at a temperature of 90°C, even when the annealing was performed for an extended period of 2 minutes, the gas-barrier properties were hardly improved. Moreover, in Comparative Example 4-10, when the amount of the nucleating agent was greater than 0.1 parts by mass, the sheet became rigid and could not be stretched.
In contrast to these, from the results of the above-described Examples 4-8 to 4-10, the polyester resin molded article according to the present invention was confirmed to have excellent transparency and gas-barrier properties.

[Examples 5-1 to 5-8 and Comparative Examples 5-1 to 5-8]

The pulverizer and pulverization conditions employed in Examples and Comparative Examples are shown in Table 8 below. The method of pulverizing the respective nucleating agent for polyester resins in Examples 5-1 to 5-8 and Comparative Examples 5-1 to 5-8 are shown in Tables 9 and 10 below, respectively.
The results of pulverization are shown in Table 11 below. It is noted here that the percent water content, the particle size of the obtained pulverized products, the 250 μm mesh-pass and the recovery rate were evaluated in accordance with the following methods.

(Percent water content Evaluation Method)

As for the percent water content, the water content of the nucleating agent for polyester resins was measured using Thermo Plus 2/(TG-DTA Series) manufactured by Rigaku Corporation to calculate the percent water content based on the following equation. The water content of the measurement sample was defined as the amount of decrease in the weight thereof when the temperature of the measurement sample (5 mg) was raised from room temperature to 150°C under a nitrogen atmosphere (flow rate: 200 ml/min) at a heating rate of 50°C /min.

$$\text{Percent water content (\%)} = \text{(Water content)/(Weight of measurement sample)} \times 100$$

(Particle Size Evaluation Method)

The particle size was measured for the respective pulverized nucleating agents for polyester resin using a laser diffraction-scattering particle size analyzer (Microtrac particle size distribution analyzer MT3300; manufactured by Nikkiso Co., Ltd.). Immediately after pulverization, the particle size distribution (volume distribution) of the pulverized product was measured under dry condition, and 50% average particle size (50% D) and 90% particle size (90% D) were determined from the thus obtained particle size distribution.
The above-described 50% average particle size represents the volume-weighted average obtained with an assumption that the particles are spherical having a diameter corresponding to the measured particle size. The above-described 90% particle size was defined as the first particle size obtained when, in the histogram of the particle size distribution, the particle sizes were cumulatively added from the smallest ones and the integrated value surpassed 90%.

(250 μm mesh-pass)

The 250 μm mesh-pass represents the ratio of the pulverized product that passed through a 250-μm mesh. The symbol ○ was assigned when a mesh-pass of not less than 90% by mass was obtained with respect to the loaded amount of the sample, and the symbol × was assigned when such mesh-pass was not obtained. It is noted here that an evaluation × was given when adhesion of the pulverized product occurred during pulverization in the pulverizing vessel.

(Load Resistance Evaluation Method)

The load resistance was examined in order to judge the possibility of occurrence of secondary aggregation and blocking during transport of the pulverized nucleating agent for polyester resins filled in a bag in a loaded condition. As the examination method, the respective pulverized nucleating agents for polyester resin was filled in an aluminum

bag, and the bag was hermetically sealed such that no air was contained therein. The bag was left to stand in a 50°C thermostat oven under a load of 50 g/cm$^2$.

The symbol × was assigned when blocking occurred after one month and the symbol ○ was assigned when blocking did not occur.

(Recovery Rate)

The recovery rate represents the ratio of the recovered pulverized product with respect to the starting material. The symbol ○ was assigned when the recovery rate was 90% or higher and the symbol × was assigned when the recovery rate was less than 90%.

(Pulverizer and Pulverization Conditions)

[Table 8]

| Pulverizer name | Pulverization method | Loaded amount | Pulverization conditions |
|---|---|---|---|
| Co-Jet Systme α-mk III; manufactured by Seishin Enterprise Co., Ltd. | Air flow-type | 60g/h (Continuous) | Compressed air: 0.69 MPa, Air flow rate: 0.4 m$^3$/ min |
| Micro ACM Pulverizer ACM-15H; manufactured by Hosokawa Micron Corporation | High speed rotation-impact type | 150kg/h (Continuous) | Pulverizing rotor rotational speed: 7800mph, Classification rotor rotational speed: 7000mph, Air flow rate: 10 m$^3$ / min |
| Jiyu Mill M-2; manufactured by Nara Machinery Co., Ltd. | High speed rotation-impact type | 50kg/h (Continuous) | Motor power: 2.2 kW, Rotor rotational speed: 6100rpm, Screen size: 0.3 mm |
| Dry stirring mill FK80; manufactured by Kurimoto Ltd. | Medium-stirring type mill | 6kg/h (Continuous) | Alumina beads of 2 mm in diameter are loaded to 70% in an 80-L pulverizing vessel. Agitator stirring rate: 288rpm |
| Dry-type attritor [MA01D model]; manufactured by Mitsui Mining Co., Ltd. | Medium-stirring type mill | 30 g Pulverization for 5 minutes | Grinding medium: 600 g of steatite beads of 2 mm in diameter, Agitator rotational speed 400 rpm |
| Pot mill rotating table AN-3S; manufactured by Nitto Kagaku Co., Ltd. | Container driving-type mill | 500g Pulverization for one hour | Roller rotational speed: 200 rpm, Grinding medium: 500 g of φ15-alumina ball |

[Table 9]

| | Nucleating agent for polyester resin | Pulverizer | Percent water content [%] |
|---|---|---|---|
| Example 5-1 | benzenesulfonamide sodium salt | Air flow-type pulverizer CO-JET System-αmK III model | 0.5 |
| Example 5-2 | toluene-4-sulfonamide sodium salt | Air flow-type pulverizer CO-JET System-αmK III model | 2.1 |
| Example 5-3 | toluene-4-sulfonamide potassium salt | Air flow-type pulverizer CO-JET System-αmK III model | 1.4 |
| Example 5-4 | toluene-4-sulfonamide calcium salt | Air flow-type pulverizer CO-JET System-αmK III model | 1.6 |

(continued)

| | Nucleating agent for polyester resin | Pulverizer | Percent water content [%] |
|---|---|---|---|
| Example 5-5 | N-phenyl-4-methylbenzene sulfonamide sodium salt | Air flow-type pulverizer CO-JET System-αmK III model | 1.1 |
| Example 5-6 | 1,2-benzisothiazol-3(2H)-one-1,1-dioxide sodium salt | Air flow-type pulverizer CO-JET System-αmK III model | 5.5 |
| Example 5-7 | 1,2-benzisothiazol-3(2H)-one-1,1-dioxide sodium salt | High speed rotation-impact type pulverizer Micro ACM Pulverizer ACM-15H | 7.8 |
| Example 5-8 | 1,2-benzisothiazol-3(2H)-one-1,1-dioxide sodium salt | High speed rotation-impact type pulverizer Jiyu Mill M-2 | 4.7 |

[Table 10]

| | Nucleating agent for polyester resin | Pulverizer | Percent water content [%] |
|---|---|---|---|
| Comparative Example 5-1 | 1,2-benzisothiazol-3(2H)-one-1,1-dioxide sodium salt | (Medium-stirring type mill) Dry stirring mill FK80 | 19.8 |
| Comparative Example 5-2 | 1,2-benzisothiazol-3(2H)-one-1,1-dioxide sodium salt | (Medium-stirring type mill) Dry-type attritor [MA01D model] | 0.1 |
| Comparative Example 5-3 | 1,2-benzisothiazol-3(2H)-one-1,1-dioxide sodium salt | (Container driving-type mill) Pot mill rotating table AN-3S | 0.1 |
| Comparative Example 5-4 | toluene-4-sulfonamide sodium salt | (Medium-stirring type mill) Dry-type attritor [MA01D model] | 19.8 |
| Comparative Example 5-5 | 1,2-benzisothiazol-3(2H)-one-1,1-dioxide sodium salt | (Medium-stirring type mill) Dry-type attritor [MA01D model] | 19.8 |
| Comparative Example 5-6 | 1,2-benzisothiazol-3(2H)-one-1,1-dioxide sodium salt | Air flow-type pulverizer CO-JET System-αmK III model | 10.1 |
| Comparative Example 5-7 | 1,2-benzisothiazol-3(2H)-one-1,1-dioxide sodium salt | High speed rotation-impact type pulverizer Micro ACM Pulverizer ACM-15H | 19.8 |
| Comparative Example 5-8 | 1,2-benzisothiazol-3(2H)-one-1,1-dioxide sodium salt | High speed rotation-impact type pulverizer Jiyu Mill M-2 | 19.8 |

For the pulverized products obtained in Examples 5-1 to 5-8 and Comparative Examples 5-1 to 5-8, the particle size, 250 μm mesh-pass, load resistance and recovery rate were evaluated. The results thereof are shown in the following Table 11.

[Table 11]

| | Particle size of pulverization product [μ m] | | 250 μm mesh-pass [%] | Load resistance | Recovery rate [%] |
|---|---|---|---|---|---|
| | 50%D | 90%D | | | |
| Example 5-1 | 2.9 | 6.5 | 96 | ○ | ○ |
| Example 5-2 | 2.4 | 5.9 | 96 | ○ | ○ |
| Example 5-3 | 2.2 | 5.6 | 97 | ○ | ○ |
| Example 5-4 | 2.3 | 5.7 | 95 | ○ | ○ |

(continued)

| | Particle size of pulverization product [$\mu$ m] | | 250 $\mu$m mesh-pass [%] | Load resistance | Recovery rate [%] |
|---|---|---|---|---|---|
| | 50%D | 90%D | | | |
| Example 5-5 | 3.6 | 8.1 | 95 | ○ | ○ |
| Example 5-6 | 1.7 | 3.8 | 95 | ○ | ○ |
| Example 5-7 | 4.4 | 10.1 | 98 | ○ | ○ |
| Example 5-8 | 15.9 | 68.2 | 95 | ○ | ○ |
| Comparative Example 5-1 | 4.9 | 26.7 | 2 | × | × |
| Comparative Example 5-2 | 20.5 | 83.3 | 3 | ○ | × |
| Comparative Example 5-3 | 31.2 | 100.8 | 2 | ○ | × |
| Comparative Example 5-4 | 24.8 | 88.1 | 3 | × | × |
| Comparative Example 5-5 | 20.3 | 79.3 | 4 | × | × |
| Comparative Example 5-6 | 1.8 | 4.1 | 96 | × | ○ |
| Comparative Example 5-7 | 4.3 | 10.1 | 97 | × | ○ |
| Comparative Example 5-8 | 16.3 | 70.2 | 96 | × | ○ |

According to Comparative Examples 5-1 to 5-5 shown in the above-described Table 11, when a medium pulverizer utilizing a grinding medium for pulverization was employed, the pulverized products were adhered in the vessel, so that they were hardly recovered, and the 250 $\mu$m mesh-pass was extremely low. In addition, according to Comparative Examples 5-6 to 5-8, it was confirmed that, even in cases where a pulverizer which does not utilize a grinding medium was employed for pulverization, when the percent water content was high, secondary aggregation was likely to occur and blocking occurred in the load tests.

In contrast to these, from Examples 5-1 to 5-8, the pulverization method according to the present invention was confirmed to be able to stably pulverize the respective nucleating agents within a desired range of particle size by drying the nucleating agent to a percent water content of not higher than 8% by mass and pulverizing it using a pulverizer not utilizing a grinding medium.

[Reference Example 3]

The pulverized product obtained in the above-described Example 5-2 was dried (120°C for 5 hours) using a vacuum dryer to a percent water content of 0.3%. The resultant was added in an amount of 0.3 parts by mass with respect 100 parts by mass of a polyethylene terephthalate resin (TR-8550 manufactured by Teijin Chemicals Ltd.) and mixed well. When the resulting mixture was granulated using a biaxial extruder (machine: TEX28V manufactured by The Japan Steel Works, Ltd.; cylinder temperature: 270°C; screw speed: 200 rpm), a pellet was obtained without any problems.

Then, when the granulation was carried out in the same manner as described in the above except that the pulverized product obtained in the above-described Example 5-2, which had a percent water content of 2.1 %, was not vacuum dried and used as it was, foaming of the strands occurred and the strands were cut during the granulation, so that it was difficult to obtain a pellet. From the above results, it was confirmed that it is preferred to dry the pulverized product to a percent water content of not higher than 1% by mass before adding it to a polyester resin composition.

[Examples 6-1 to 6-6 and Comparative Examples 6-1 to 6-7]

[Production Example 3]

To 100 parts by mass of polyethylene terephthalate (intrinsic viscosity: 0.8 dL/g), 0.3 parts by mass of Compound No. 6 was added and mixed well, and the resultant was granulated using a biaxial extruder (cylinder temperature: 270°C, screw speed: 200 rpm) to prepare a masterbatch having a concentration of 0.3%.

Then, the thus obtained masterbatch having a concentration of 0.3% and the polyethylene terephthalate (intrinsic viscosity: 0.8 dL/g) were mixed in such a manner that the resulting mixture contained 0.010 parts by mass of Compound No. 6 with respect to 100 parts by mass of the polyethylene terephthalate (intrinsic viscosity: 0.8 dL/g), thereby obtaining a resin composition 1.

Here, the intrinsic viscosity was determined as follows. The measurement sample, polymer resin composition, was freeze-pulverized in advance, and after drying the pulverized product at 140°C for 15 minutes, 0.20 g thereof was weighed. A mixed solvent of 1,1,2,2-tetrachloroethane/phenol (weight ratio: 1/1) was then added thereto in an amount of 20 ml and the resulting mixture was stirred at 120°C for 15 minutes to completely dissolve the pulverized product. Thereafter, the resulting solution was cooled to room temperature and filtered through a glass filter, and the specific gravity of the solution was then measured using an Ubbelohde viscometer, whose temperature had been adjusted to 25°C, to determine the intrinsic viscosity by the following equation:

$$[\eta] = (-1 + \sqrt{(1 + 4K'\cdot\eta sp)})/(2K'C)$$

$$\eta sp = (\tau - \tau 0)\cdot\tau 0$$

(wherein,

[η]: intrinsic viscosity (dL/g)
ηsp: specific viscosity
K': Huggins constant ( = 0.33)
C: concentration (g/dL)
τ: sample fall-time (sec)
τ0: solvent fall-time (sec))

[Production Example 4]

A masterbatch having a concentration of 0.5% was prepared in the same manner as in the above-described Production Example 3, except that the amount of Compound No. 6 was changed from 0.3 parts by mass to 0.5 parts by mass. Then, the thus obtained masterbatch having a concentration of 0.5% and the polyethylene terephthalate (intrinsic viscosity: 0.8 dL/g) were mixed in such a manner that the resulting mixture contained 0.020 parts by mass of Compound No. 6 with respect to 100 parts by mass of the polyethylene terephthalate (intrinsic viscosity: 0.8 dL/g), thereby obtaining a resin composition 2.

[Production Example 5]

A resin composition 3 was obtained by mixing the masterbatch having a concentration of 0.3% and the polyethylene terephthalate (intrinsic viscosity: 0.8 dL/g) in the same manner as in the above-described Production Example 3, except that the content of Compound No. 6 with respect to 100 parts by mass of the polyethylene terephthalate (intrinsic viscosity: 0.8 dL/g) was changed from 0.010 parts by mass to 0.025 parts by mass.

[Production Example 6]

A masterbatch having a concentration of 0.3% was prepared in the same manner as in the above-described Production Example 3, except that the polyethylene terephthalate (intrinsic viscosity: 0.8 dL/g) was changed to other polyethylene terephthalate (intrinsic viscosity: 0.6 dL/g). Then, the above-described masterbatch having a concentration of 0.3% and the polyethylene terephthalate (intrinsic viscosity: 0.6 dL/g) were mixed in such a manner that the resulting mixture contained 0.025 parts by mass of Compound No. 6 with respect to 100 parts by mass of the polyethylene

terephthalate (intrinsic viscosity: 0.6 dL/g), thereby obtaining a resin composition 4.

[Production Example 7]

A masterbatch having a concentration of 0.3% was prepared in the same manner as in the above-described Production Example 3, except that the polyethylene terephthalate (intrinsic viscosity: 0.8 dL/g) was changed to other polyethylene terephthalate (intrinsic viscosity: 1.1 dL/g). Then, the above-described masterbatch having a concentration of 0.3% and the polyethylene terephthalate (intrinsic viscosity: 1.1 dL/g) were mixed in such a manner that the resulting mixture contained 0.025 parts by mass of Compound No. 6 with respect to 100 parts by mass of the polyethylene terephthalate (intrinsic viscosity: 1.1 dL/g), thereby obtaining a resin composition 5.

[Comparative Production Example 1]

A comparative resin composition 1 was obtained without adding the nucleating agent for polyester resins to the polyethylene terephthalate (intrinsic viscosity: 0.8 dL/g).

[Comparative Production Example 2]

To 100 parts by mass of the polyethylene terephthalate (intrinsic viscosity: 0.8 dL/g), 0.020 parts by mass of Compound No. 6 was added in the form of powder, and the resultant was mixed well to obtain a comparative resin composition 2.

[Comparative Production Example 3]

A comparative resin composition 3 was obtained by mixing the masterbatch having a concentration of 0.3% and the polyethylene terephthalate (intrinsic viscosity: 0.8 dL/g) in the same manner as in the above-described Production Example 3, except that the content of Compound No. 6 with respect to 100 parts by mass of the polyethylene terephthalate (intrinsic viscosity: 0.8 dL/g) was changed from 0.010 parts by mass to 0.030 parts by mass.

[Comparative Production Example 4]

A masterbatch having a concentration of 0.3% was prepared in the same manner as in the above-described Production Example 3, except that the polyethylene terephthalate (intrinsic viscosity: 0.8 dL/g) was changed to other polyethylene terephthalate (intrinsic viscosity: 0.4 dL/g). Then, the thus obtained masterbatch having a concentration of 0.3% and the polyethylene terephthalate (intrinsic viscosity: 0.4 dL/g) were mixed in such a manner that the resulting mixture contained 0.025 parts by mass of Compound No. 6 with respect to 100 parts by mass of the polyethylene terephthalate (intrinsic viscosity: 0.4 dL/g), thereby obtaining a comparative resin composition 4.

[Comparative Production Example 5]

A masterbatch having a concentration of 0.3% was prepared in the same manner as in the above-described Production Example 3, except that the polyethylene terephthalate (intrinsic viscosity: 0.8 dL/g) was changed to other polyethylene terephthalate (intrinsic viscosity: 1.5 dL/g). Then, the thus obtained masterbatch having a concentration of 0.3% and the polyethylene terephthalate (intrinsic viscosity: 1.5 dL/g) were mixed in such a manner that the resulting mixture contained 0.025 parts by mass of Compound No. 6 with respect to 100 parts by mass of the polyethylene terephthalate (intrinsic viscosity: 1.5 dL/g), thereby obtaining a comparative resin composition 5.

[Production of Plastic Bottle]

For each of the resin compositions obtained in the above-described Production Examples 3 to 7 and Comparative Production Examples 1 to 5, after drying the respective resin composition in a Geer oven at 160°C for 4 hours, a preform (mouth outer diameter: 25 mm, weight: 23 g) was molded using an injection molding machine at an injection temperature of 280°C. Then, the thus obtained preform was biaxially stretched and blow molded at the respective die temperature shown in Table 12 or 13 below to prepare a 500-ml plastic bottle. For the thus obtained plastic bottles, the following evaluations were performed.

(1) Die Contamination: After continuously using a die for 6 hours to mold plastic bottles, the die was wiped with a white cotton cloth. The symbol × was assigned when contamination was confirmed and the symbol ○ was assigned

when there was no contamination.

(2) Thermal Contraction Resistance: Each of the thus molded plastic bottles was subjected to rinsing with warm water shower at about 75°C for about 30 seconds. The symbol ○ was assigned when the contraction rate of the plastic bottle was less than 1% and the symbol × was assigned when it was not less than 1%.

(3) Outer Appearance: The color of the respective molded plastic bottles was observed.

[Table 12]

| | | Example 6-1 | Example 6-2 | Example 6-3 | Example 6-4 | Example 6-5 | Example 6-6 |
|---|---|---|---|---|---|---|---|
| Conditions for resin composition production | Resin composition | Resin composition 1 | Resin composition 2 | Resin composition 3 | Resin composition 4 | Resin composition 5 | Resin composition 2 |
| | Nucleating agent/added amount (parts by mass) | 0.010 | 0.020 | 0.025 | 0.025 | 0.025 | 0.020 |
| | Intrinsic viscosity of the polyester resin [dL/g] | 0.8 | 0.8 | 0.8 | 0.6 | 1.1 | 0.8 |
| | Method of adding the nucleating agent to the polyester resin | Masterbatch | Masterbatch | Masterbatch | Masterbatch | Masterbatch | Masterbatch |
| Die temperature at the time of stretch blow molding [℃] | | 130 | 130 | 130 | 130 | 130 | 100 |
| Evaluations | Die contamination | ○ | ○ | ○ | ○ | ○ | ○ |
| | Thermal contraction resistance | ○ | ○ | ○ | ○ | ○ | ○ |
| | Outer appearance | Transparent | Transparent | Transparent | Transparent | Transparent | Transparent |

[Table 13]

| | | Comparative Example 6-1 | Comparative Example 6-2 | Comparative Example 6-3 | Comparative Example 6-4 | Comparative Example 6-5 | Comparative Example 6-6 | Comparative Example 6-7 |
|---|---|---|---|---|---|---|---|---|
| Conditions for resin composition production | Resin composition | Comparative resin composition 1 | Comparative resin composition 1 | Comparative resin composition 2 | Comparative resin composition 3 | Comparative resin composition 4 | Comparative resin composition 5 | Resin composition 2 |
| | Nucleating agent/ added amount (parts by mass) | —[1)] | —[1)] | 0.020 | 0.030 | 0.025 | 0.025 | 0.020 |
| | Intrinsic viscosity of the polyester resin [dL/g] | 0.8 | 0.8 | 0.8 | 0.8 | 0.4 | 1.5 | 0.8 |
| | Method of adding the nucleating agent to the polyester resin | —[1)] | —[1)] | Powder | Masterbatch | Masterbatch | Masterbatch | Masterbatch |
| Die temperature at the time of stretch blow molding [℃] | | 130 | 100 | 130 | 130 | 130 | 130 | 165 |
| Evaluation results | Die contamination | ○ | ○ | ○ | ○ | ○ | ○ | × |
| | Thermal contraction resistance | × | × | Blow molding was not possible | Blow molding was not possible | ○ | Blow molding was not possible | ○ |
| | Outer appearance | Transparent | Transparent | —[2)] | —[2)] | Whitened | —[2)] | Whitened |

*1: Evaluations were performed without blending a nucleating agent.

*2: Since whitening occurred in the preform, stretch blow molding could not be performed, so that a plastic bottle could not be prepared.

According to Comparative Examples 6-1 and 6-2, when no nucleating agent was blended, the resulting plastic bottles had poor thermal contraction resistance. Further, in Comparative Example 6-3, when the nucleating agent in the form of powder was directly added to the polyester resin and the resultant was molded, since whitening occurred in the preform, stretch blow molding could not be molded, so that a plastic bottle could not be prepared.

In addition, according to Comparative Examples 6-5 and 6-6, whitening of the plastic bottle occurred when the intrinsic viscosity of the polyester resin was less than 0.5 dL/g, while when it was greater than 1.1 dL/g, since stretch blow molding of the preform could not be performed, a plastic bottle could not be prepared.

Furthermore, according to Comparative Example 6-7, when the die temperature was higher than 160°C, the die contamination was prominent and it was difficult to perform continuous production.

In contrast to these, from Examples 6-1 to 6-6, it was confirmed that the plastic bottles prepared by the production method according to the present invention had good thermal contraction resistance and that the die was not contaminated and a plastic bottle having good outer appearance could be molded.

## Claims

1. A polyester resin molded article, **characterized in that**, it is obtainable by, being subjected to an annealing treatment for 1 second to 2 minutes at a temperature of 100°C to 200°C after molding of a polyester resin composition comprising, with respect to 100 parts by mass of a polyester resin, 0.001 to 1 parts by mass of a nucleating agent for polyester resins which is composed of a sulfonamide compound metal salt or sulfonimide compound metal salt.

2. The polyester resin molded article according to claim 1, wherein said polyester resin is polyethylene terephthalate.

3. The polyester resin molded article according to claim 1, wherein said nucleating agent for polyester resins is selected from the group consisting of benzenesulfonamide metal salts, toluene-4-sulfonamide metal salts, N-phenyl-4-benzenesulfonamide metal salts, N-phenyl-4-methyl-benzenesulfonamide metal salts and 1,2-benzisothiazol-3(2H)-one-1,1-dioxide metal salts.

4. The polyester resin molded article according to claim 1, wherein said molding is stretch-molding into the form of a sheet.

5. The polyester resin molded article according to claim 1, wherein said molding is stretch-molding into the form of a bottle.

6. The polyester resin molded article according to claim 1, wherein the half-value width of the maximum peak at about 1730 $cm^{-1}$ obtained by microscopic Raman spectroscopy is not greater than 18 $cm^{-1}$.

7. The polyester resin molded article according to claim 1, which has a carbon dioxide gas permeability coefficient of $1.0 \times 10^{-17}$ to $5.3 \times 10^{-17}$ $mol \cdot m/m^2 \cdot s \cdot Pa$.

8. A method of producing the polyester resin molded article according to any of claims 1 to 7, wherein a polyester resin composition which comprises, with respect to 100 parts by mass of a polyester resin, 0.001 to 1 parts by mass of a nucleating agent for polyester resins which is composed of a sulfonamide compound metal salt or sulfonimide compound metal salt is molded at a temperature of 250 to 300°C and the resultant molded article is subjected to an annealing treatment for 1 second to 2 minutes at a temperature of 100°C to 200°C.

## Patentansprüche

1. Ein Polyesterharzformartikel, **dadurch gekennzeichnet, dass**, er erhältlich ist, indem einer Wärmebehandlung für 1 Sekunde bis zu 2 Minuten bei einer Temperatur von 100°C bis 200°C nach dem Formen einer Polyesterharz-Zusammensetzung unterzogen wird, die, in Bezug auf 100 Gewichtsteile eines Polyesterharzes, 0,001 zu 1 Gewichtsteilen eines Nukleierungsmittels für Polyesterharze umfasst, das aus einem Sulfonamidverbindungsmetallsalz oder Sulfonimidverbindungsmetallsalz besteht.

**2.** Der Polyesterharzformartikel nach Anspruch 1, wobei das Polyesterharz Polyethylenterephthalat ist.

**3.** Der Polyesterharzformartikel nach Anspruch 1, wobei das Nukleierungsmittel für Polyesterharze aus der Gruppe selektiert wird, die aus Benzensulfonamidmetallsalzen, Toluen-4-Sulfonamidmetallsalzen, N-phenyl-4-Benzensulfonamidmetallsalzen, N-phenyl-4-Methyl-Benzensulfonamidmetallsalzen und 1,2-Benzisothiazo1-3(2H)-eins-1,1-Dioxidmetallsalzen besteht.

**4.** Der Polyesterharzformartikel nach Anspruch 1, wobei das Formverfahren Stretch-Formen in die Form einer Folie ist.

**5.** Der Polyesterharzformartikel nach Anspruch 1, wobei das Formverfahren Stretch-Formen in die Form einer Flasche ist.

**6.** Der Polyesterharzformartikel nach Anspruch 1, wobei die Halbwertbreite des maximalen Peaks bei ca. 1730 $cm^{-1}$, die durch mikroskopische "Raman" Spektroskopie erhalten wird, nicht größer als 18 $cm^{-1}$ ist.

**7.** Der Polyesterharzformartikel nach Anspruch 1, der einen Gasdurchlässigkeitskoeffizient für Kohlenstoffdioxid von $1{,}0 \times 10^{-17}$ bis $5{,}3 \times 10^{-17}$ mol•m/m$^2$•s•Pa aufweist.

**8.** Verfahren zur Herstellung des Polyesterharzformartikels nach einem der Ansprüche 1 bis 7, wobei die Polyesterharz-Zusammensetzung, die, in Bezug auf 100 Gewichtsteile eines Polyesterharzes, 0,001 bis 1 Gewichtsteile eines Nukleierungsmittels für Polyesterharze umfasst, das aus einem Sulfonamidverbindungsmetallsalz oder Sulfonimidverbindungsmetallsalz besteht, bei einer Temperatur von 250 bis 300°C geformt wird und der resultierende Formartikel einer Wärmebehandlung für 1 Sekunde bis 2 Minuten bei einer Temperatur von 100°C bis 200°C unterzogen wird.

## Revendications

**1.** Article moulé de résine polyester, **caractérisé en ce qu'**il peut être obtenu en faisant l'objet d'un traitement thermique de recuit pendant une durée d'une seconde à deux minutes à une température de 100 °C à 200 °C après le moulage d'une composition de résine polyester comprenant, par rapport à 100 parties en masse d'une résine polyester, 0,001 à 1 partie en masse d'un agent de nucléation pour résines polyester qui est constitué d'un sel métallique de composé sulfonamide ou d'un sel métallique de composé sulfonimide.

**2.** Article moulé de résine polyester selon la revendication 1, dans lequel ladite résine polyester est du téréphtalate de polyéthylène.

**3.** Article moulé de résine polyester selon la revendication 1, dans lequel ledit agent de nucléation pour résines polyester est sélectionné dans le groupe constitué de sels métalliques de benzènesulfonamide, de sels métalliques de toluène-4-sulfonamide, de sels métalliques de N-phényl-4-benzènesulfonamide, de sels métalliques de N-phényl-4-méthylbenzènesulfonamide et de sels métalliques du dioxyde de 1,2-benzisothiazol-3(2H)-one-1,1.

**4.** Article moulé de résine polyester selon la revendication 1, dans lequel ledit moulage est un moulage par étirage sous la forme d'une feuille.

**5.** Article moulé de résine polyester selon la revendication 1, dans lequel ledit moulage est un moulage par étirage sous la forme d'une bouteille.

**6.** Article moulé de résine polyester selon la revendication 1, dans lequel la largeur de demi-valeur du pic maximal à environ 1730 $cm^{-1}$ obtenue par spectroscopie microscopique Raman n'est pas supérieure à 18 $cm^{-1}$.

**7.** Article moulé de résine polyester selon la revendication 1, qui possède un coefficient de perméabilité au dioxyde de carbone gazeux de $1{,}0 \times 10^{-17}$ à $5{,}3 \times 10^{-17}$ mol·m/m$^2$·s·Pa.

**8.** Procédé de production d'un article de résine polyester selon l'une quelconque des revendications 1 à 7, dans lequel une composition de résine polyester qui comprend, par rapport à 100 parties en masse d'une résine polyester, 0,001 à 1 partie en masse d'un agent de nucléation pour résines polyester qui est composé d'un sel métallique de composé sulfonamide ou ledit sel métallique de composé sulfonimide est moulé à une température de 250 à 300 °C et l'article moulé résultant est soumis à un traitement thermique de recuit pendant 1 seconde à 2 minutes à une température de 100 à 200°C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007327028 A
- JP 2007230312 A
- JP S596216 B
- JP S5579237 B
- JP S58110221 B
- JP H08156077 B
- JP H737515 B
- JP 2006022340 A